# EUROPÄISCHE PATENTSCHRIFT

(11) **EP 3 826 812 B1**
(45) Veröffentlichungstag und Bekanntmachung des Hinweises auf die Patenterteilung: **20.07.2022**
(21) Anmeldenummer: 19725330.5
(22) Anmeldetag: 16.05.2019
(51) Int. Cl.: B25J 9/16

(54) **VERFAHREN UND STEUERUNGSSYSTEM ZUR KALIBRIERUNG EINER HANDHABUNGSVORRICHTUNG**
METHOD AND CONTROL SYSTEM FOR CALIBRATING A HANDLING DEVICE
PROCÉDÉ ET SYSTÈME DE COMMANDE POUR ÉTALONNER UN DISPOSITIF DE MANIPULATION

(30) Priorität: 24.07.2018 DE 102018117802
(43) Veröffentlichungstag der Anmeldung: 02.06.2021
(73) Patentinhaber: Krones Aktiengesellschaft, 93073 Neutraubling (DE)
(72) Erfinder: MEHDI, Arsalan, 93073 Neutraubling (DE); DANY, Christian, 93073 Neutraubling (DE); KOLLMUSS, Manuel, 93073 Neutraubling (DE); BEER, Erhard, 93073 Neutraubling (DE)
(74) Vertreter: Benninger, Johannes
(86) Internationale Anmeldenummer: PCT/EP2019/062603
(87) Internationale Veröffentlichungsnummer: WO 2020/020505

(56) Entgegenhaltungen:
- WO-A1-2016/195176
- DE-B4-102013 014 273
- US-A1- 2006 254 364
- US-A1- 2007 138 374
- US-A1- 2011 132 131
- US-A1- 2015 217 454

## Beschreibung

Die vorliegende Erfindung betrifft ein Verfahren zum Referenzieren, Kalibrieren und/oder Initialisieren einer Handhabungsvorrichtung, insbesondere eines auch als sog. Tripod bezeichneten Parallelkinematik-Roboters, gemäß den Merkmalen des unabhängigen Verfahrensanspruchs 1. Die Erfindung betrifft zudem eine programmgesteuerte Handhabungseinrichtung mit den Merkmalen des Anspruchs 10, insbesondere einen programmgesteuerten Handhabungs- und/oder Parallelkinematik-Roboter mit an mindestens zwei parallelkinematisch beweglichen Armen aufgehängtem Werkzeugkopf, der mit einem Steuerungssystem ausgestattet ist, das insbesondere zur Durchführung des Verfahrens ausgestattet und geeignet ist und das dem Referenzieren, der Kalibrierung und/oder dem Initialisieren einer Handhabungsvorrichtung bzw. eines Parallelkinematik-Roboters dient.

Sollen stapelbare und/oder palettierfähige Objekte wie Pakete oder aus mehreren einzelnen Artikeln zusammengefasste Gebinde, die bspw. aus miteinander verbundenen Getränkebehältern gebildet sein können, hierfür geeigneten Verpackungs- oder Palettieranlagen zugeführt werden, so erfolgt der Transport der Objekte meist mit Horizontalfördereinrichtungen mit Förderbändern, auf denen die Stückgüter oder Gebinde in ununterbrochener oder unregelmäßiger Folge zu einer Handhabungseinrichtung befördert werden. Dort erfolgt eine Verschiebung, Ausrichtung und/oder Drehen einzelner Stückgüter oder Gebinde, um diese in eine geeignete räumliche Anordnung zu bringen, die eine Basis bildet, um die Stückgüter oder Gebinde in nachgeordneten Gruppierstationen zu stapelfähigen Stückgut- oder Gebindelagen zusammenzuschieben. In aktuell eingesetzten Abfüll- und Verpackungslinien werden unterschiedliche Verfahren zum Drehen von Stückgütern oder Gebinden eingesetzt, die bspw. geeignete bewegliche Anschläge oder zwei Bänder mit unterschiedlichen Geschwindigkeiten aufweisen können. Bekannte Handhabungseinrichtungen können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können bspw. auch an Mehrachsroboterarmen angeordnet sein, die seitlich an den Horizontalfördereinrichtungen platziert sind.

Das Handhaben von Stückgütern oder Gebinden umfasst in der Praxis das Anheben, Versetzen und/oder die Ausrichtung und das Verbringen oder Überführen des jeweiligen Stückgutes oder Gebindes in eine gewünschte Position bzw. Orientierung innerhalb einer zum Stapeln und/oder Palettieren geeigneten Gruppierung. Um diese Anforderungen zu erfüllen, bietet der bekannte Stand der Technik bereits zahlreiche Greifvorrichtungen mit gegeneinander zustellbaren Greifarmen, so bspw. die EP 2 388 216 A1. Eine weitere Greifvorrichtung zeigt bspw. die DE 102 04 513 A1. Dort sind mehrere sich gegenüberliegende Greifarme in einem Mittelstück geführt. Ein Greifarm ist mittels eines Stellgliedes in Bezug auf einen weiteren Greifarm verschiebbar, so dass beide Greifarme geschlossen werden können. An den unteren Enden der Greifarme sind an den einander zugewandten Seiten Greifabschnitte zum Greifen von Baustoffpaketen vorgesehen.

Neben Handhabungseinrichtungen in Gestalt von Portalrobotern werden in der Praxis auch andere Handhabungseinrichtungen zum Greifen, Verschieben, Drehen und/oder Versetzen von Artikeln oder Gebinden eingesetzt, die auf sog. Deltarobotern oder Parallelkinematik-Robotern basieren, welche in einer dreiarmigen Ausführung auch als Tripode bezeichnet werden. Jeder der Arme eines solchen Tripods oder Deltaroboters besteht aus einem an der Basis um eine gestellfeste Schwenkachse angetrieben verschwenkbar angeordneten Oberarm und einem mit dem Oberarm und dem Koppelelement gelenkig verbundenen Unterarm. Der Unterarm ist hierbei passiv, frei von einem Antrieb zu dessen Verschwenkung gegenüber dem Oberarm oder dem Koppelelement ausgeführt. Einer oder mehrere der Unterarme können bspw. über Kugelgelenke mit den jeweils zugehörigen Oberarmen und dem Koppelelement verbunden sein. Ein solcher einzelner Unterarm ist frei schwenkbar und besitzt keine Eigenstabilität. Alle Oberarme eines Deltaroboters sind jeweils um vorzugsweise innerhalb einer gemeinsamen Ebene liegende Schwenkachsen verschwenkbar angetrieben gelagert. Drei mit dem Koppelelement und jeweils mit ihrem zugehörigen Oberarm verbundene Unterarme bilden in jeder Position ein Kraftdreieck, das sich nur bewegen lässt, wenn die drei Oberarme synchron die für sie berechneten Schwenkbewegungen um deren gestellfeste Schwenkachsen ausführen. Zwei oder mehr Schwenkachsen können parallel verlaufen; in der Regel weisen alle Schwenkachsen zwei Schnittpunkte mit anderen Schwenkachsen auf.

Wenigstens einer der Unterarme kann aus zwei auch als Elle und Speiche zu bezeichnenden und solchermaßen ein Parallelogrammgestänge bildenden Gestängeelementen bestehen, um das Koppelelement in zumindest einer vorgegebenen Ausrichtung relativ zur Basis zu führen. Das Koppelelement dient dabei als Arbeitsplattform oder Werkzeugkopf, die/der in der Praxis auch als Tool-Center-Point (TCP) bezeichnet wird. An diesem Werkzeugkopf oder TCP kann ein Manipulator angeordnet sein, bspw. in Gestalt von gegeneinander zustellbaren Greifarmen o. dgl. Handhabungseinrichtung, so dass damit Artikel, Gebinde o. dgl. Stückgüter ergriffen und gedreht, verschoben oder von einer Auflagefläche angehoben werden können.

Der an der Arbeitsplattform, dem Werkzeugkopf bzw. dem TCP angeordnete Manipulator kann wahlweise drehbar gelagert sein, um den Manipulator ausrichten oder eine gewünschte Drehung der Artikel oder Stückgüter ausführen zu können. Anstelle einer drehbeweglichen Lagerung des Manipulators am Koppelelement ist es grundsätzlich auch denkbar, den Manipulator unverdrehbar am Koppelelement anzuordnen und das gesamte Koppelelement unter entsprechender Ausgleichbewegung der Arme vermittels der Teleskopwelle gegenüber der Basis zu verdrehen. Aus der DE 10 2010 006 155 A1, aus der DE 10 2013 208 082 A1 sowie aus der US 8 210 068 B1 sind verschiedene Handhabungseinrichtung mit Parallelkinematik-Robotern bekannt.

Die vielfach als Handhabungsroboter eingesetzten Parallelkinematik-Roboter verfügen aufgrund ihrer präzisen Steuerbarkeit und der ausgeprägten Steifigkeit der zusammenwirkenden beweglichen Stellarme über eine sehr hohe Positioniergenauigkeit und können überdies mit sehr hohen Positioniergeschwindigkeiten betrieben werden. Die in aller Regel elektromotorisch angetriebenen Stellarme bedürfen allerdings für ihre einwandfreie Funktion eine Kalibrierung aller vorhandenen Antriebe, damit die Steuerbefehle auch in entsprechende Stellbewegungen umgesetzt werden können. Bei fehlender oder unzureichender Kalibrierung bestünde insbesondere nach einem Neustart des Systems die Gefahr, dass das Steuersystem über keine exakten Positionswerte der jeweiligen elektromotorischen Antriebe verfügt, wodurch auch die exakte Positionierbarkeit der Antriebe in Frage gestellt wäre. Eine erneute Kalibrierung des Systems ist daher zumindest nach jedem Systemneustart, aber auch nach jedem Wiederstart unverzichtbar.

Grundsätzlich besteht das Ziel eines derartigen Kalibriervorganges darin, jeden von mehreren elektromotorisch angetriebenen Stellarmen des Parallelkinematik-Roboters gegen einen mechanischen Anschlag zu bewegen. Da dieser mechanische Anschlag gleichzeitig eine Endlage innerhalb des Bewegungsbereiches des betreffenden Stellarmes bildet, kann die dadurch ermittelte Position im Rahmen des Kalibriervorganges erfasst und dem Steuerungssystem als Endlagenposition übermittelt werden. Eine in der Praxis sinnvolle Vorgehensweise beim Kalibrieren erfordert das Stillsetzen der Maschine, etwa indem ein Not-Aus-Schalter betätigt wird, weil erst dann eine Sicherheitsabschottung der Maschine, die gegen ungewollte manuelle Eingriffe zu schützen hat, entriegelt und geöffnet werden kann. Eine solche Sicherheitsabschottung, die durch eine an sich bekannte teilverglaste Einhausung gebildet sein kann, weist in aller Regel Türen oder Klappen o. dgl. auf, die erst dann geöffnet werden können, wenn die Handhabungseinrichtung stillgelegt ist. Anschließend kann eine Kalibriervorrichtung, die etwa durch einen innerhalb des Schwenkbereiches eines Oberarmes des Parallelkinematik-Roboters einsetzbaren Riegel gebildet sein kann, eingesetzt und in seiner vorgesehenen Position gesichert werden. Anschließend kann nach Verschließen der zuvor geöffneten Türen oder Klappen der Kalibriervorgang gestartet werden, indem der elektromotorisch veschwenkbare Oberarm gegen den Riegel verschwenkt und damit eine definierte Endlage des Oberarms eingenommen wird. Da diese Kalibriervorgänge meist von zwei Personen durchzuführen und für jeden Oberarm nach Umpositionieren des manuell einsetzbaren Riegels wiederholt werden müssen, ist der gesamte Vorgang sehr zeitintensiv. Darüber hinaus verbleibt das Risiko, dass es nach einer fehlerhaft oder unvollständig durchgeführten Kalibrierung zu mechanischen Schäden an der Handhabungseinrichtung kommen kann.

Ein Parallelarmroboter mit Einrichtungen zur Positionskalibrierung von Stellarmen geht aus der DE 10 2013 014 273 B4 hervor. Um nach längerer Betriebsdauer Abweichungen der Stellbewegungen von Sollbewegungen erfassen und die gewünschte Stellpräzision herstellen zu können, werden einzelne Antriebsarme bei der Positionskalibrierung zu vorbestimmten Referenzpositionen geschwenkt, während Positionssignale von Rotationsdetektoren der Arme zum Identifizieren der Ursprungspositionen der Antriebsmotoren verwendet werden. Die eingesetzten Kalibrierungsvorrichtungen arbeiten mit Messuhren, an welche die Antriebsarme angelegt werden.

Die Präzision einer solchen Kalibrierung hängt somit nicht nur von der exakten Befestigung der Messuhren, der Güte und Wiederholbarkeit der berührenden Zusammenwirkung des Antriebsarmes mit der Messuhr und der Anzeigegenauigkeit der Messuhren ab, sondern auch von der Ablesegenauigkeit der Messuhren, die durch einen Beobachter zu erfolgen hat, womit sich zahlreiche Fehlerquellen für die Messungen und für die Kalibriervorgänge ergeben.

Angesichts der im Stand der Technik erkannten Nachteile und Einschränkungen kann das vorrangige Ziel der vorliegenden Erfindung darin gesehen werden, ein verbessertes und insbesondere mit weniger Personal- und Zeitaufwand durchführbares Kalibrierverfahren sowie ein entsprechendes Steuerungssystem zur Verfügung zu stellen, das nicht nur zu zuverlässigeren Ergebnissen führt, sondern das auch jederzeit reproduzierbar ist, so dass durch manuelle Fehlbedienungen ausgelöste Kalibrierfehler nahezu ausgeschlossen werden können.

Dieses Ziel der Erfindung wird mit den Gegenständen der unabhängigen Ansprüche erreicht. Merkmale vorteilhafter Weiterbildungen der Erfindung ergeben sich aus den abhängigen Ansprüchen sowie aus der nachfolgenden Erfindungsoffenbarung.

Zur Erreichung des als vorrangig identifizierten Ziels schlägt die vorliegende Erfindung ein Verfahren zum Referenzieren, Kalibrieren und/oder Initialisieren einer Handhabungseinrichtung, insbesondere eines Handhabungs- und/oder ParallelkinematikRoboters mit einem an mindestens zwei parallelkinematisch beweglichen Armen aufgehängten Werkzeugkopf vor, das die nachfolgenden Merkmale und Verfahrensschritte umfasst. Bei dem zu referenzierenden und/oder zu kalibrierenden und/oder zu initialisierenden Handhabungs- und/oder Parallelkinematik-Roboter ist eine bewegliche und verstellbare Antriebsverbindung zwischen einem ortsfesten Antriebsmotor und dem um mindestens eine Drehachse beweglichen Werkzeugkopf vorgesehen, wobei die bewegliche Antriebsverbindung insbesondere durch eine längenvariable und/oder gelenkig bewegliche Kardanwelle gebildet sein kann.

Außerdem umfasst bei dem zu referenzierenden und/oder zu kalibrierenden und/oder zu initialisierenden Handhabungs- und/oder Parallelkinematik-Roboter jeder der mindestens zwei Arme einen um eine definierte Oberarm-Schwenkachse motorisch zwischen zwei Endlagen beweglichen Oberarm sowie einen am Oberarm schwenkbeweglich gelagerten Unterarm. Diese Arme halten den an den mindestens zwei Unterarmen beweglich aufgehängten Werkzeugkopf, der mittels programmgesteuerter und aufeinander abgestimmter Schwenkbewegungen der Oberarme sowie der dadurch geführten Unterarme innerhalb eines definierten Bewegungsraumes beweglich ist. Wenn im vorliegenden Zusammenhang allgemein von einem solchen Werkzeugkopf die Rede ist, so kann dies bspw. bei einem Handhabungsroboter ein Greifarm mit zwei gegeneinander zustellbaren Greifern oder Greifbacken zum Erfassen, Anheben, Verschieben, Umsetzen oder sonstigen Manipulieren von Artikeln, Gegenständen, Stückgütern, Gebinden oder Gruppierungen mit mehreren solcher Artikel, Gegenstände, Stückgüter, Gebinde sein, wobei der Greifarm mit den gegeneinander zustellbaren Greifern oder Greifbacken vorzugsweise als Ganzes rotierbar ausgestaltet ist. Diese Rotationsbewegungen können mittels der oben erwähnten Antriebsverbindung bzw. der längenverstellbaren und/oder gelenkig beweglichen Kardanwelle ausgelöst und gesteuert werden, welche Antriebsverbindung bzw. Kardanwelle in vertikaler oder schräger Richtung von einer oberen Aufhängung des Parallelkinematik-Roboters zum rotierbaren Werkzeugkopf nach unten führt.

Sowohl die um horizontale Achsen beweglichen Oberarme als auch die für die Rotationsbewegungen des Werkzeugkopfes verantwortliche Antriebswelle sind typischerweise elektromotorisch betrieben, so dass bei beiden Antriebsarten eine Referenzierung, Kalibrierung und/oder Neuinitialisierung nach einem Maschinenstillstand, nach einem Stromausfall, einer Abschaltung und/oder einem erneuten Starten einer Steuerungsvorrichtung der exakten Positionen der Antriebseinheiten notwendig ist, um die angestrebten präzisen Stell- und Manipulationsbewegungen aller beweglichen und angetriebenen Elemente und Komponenten des Handhabungs- und/oder Parallelkinematik-Roboters sicherstellen zu können.

Bei dem erfindungsgemäßen Referenzierungs-, Kalibrierungs- und/oder Initialisierungsverfahren werden in einem ersten Verfahrensschritt mittels Erfassung der an den Oberarm-Schwenkachsen wirksamen Lastmomente und durch Vergleich der auf die mindestens zwei Oberarme wirkenden jeweiligen Lastmomente und/oder durch Erfassung von Signalen von Positions- und/oder Winkelsensoren mittels der motorischen Antriebe jeweils übereinstimmende Winkellagen der wenigstens zwei Oberarme eingestellt. Es versteht sich von selbst, dass zur Durchführung dieses ersten Verfahrensschrittes die für die Ansteuerung der motorischen Antriebe der wenigstens zwei Oberarme verantwortliche zentrale Steuerungseinheit eingeschaltet und das Steuerungsprogramm gestartet ist, was bspw. nach einer Abschaltphase einige Zeit für den Programmstart erfordert. Normalerweise werden in dieser Startphase auch alle motorischen Antriebe initialisiert und referenziert, um jeden Steuerungsbefehl zum Antrieb der Stellmotoren in möglichst exakte Antriebsbewegungen umsetzen zu können.

Bei dem hier beschriebenen ersten Verfahrensschritt, bei dem mittels einer Erfassung der an den Oberarm-Schwenkachsen wirksamen Lastmomente und mittels eines Vergleiches der auf die mindestens zwei Oberarme wirkenden jeweiligen Lastmomente und/oder mittels einer Erfassung der exakten Positionen der Oberarme durch Auswertung von Signalen von den Oberarmen zugeordneten Positions- und/oder Winkelsensoren mit Hilfe der motorischen Antriebe jeweils übereinstimmende Winkellagen der wenigstens zwei Oberarme eingestellt werden, besteht das vorrangige Ziel darin, für den Werkzeugkopf eine mittige Position innerhalb seines Bewegungs- und/oder Manipulationsraumes zu finden, was mangels optischer oder sonstiger Positionskontrolle am sinnvollsten über die Erfassung der auf die Oberarme wirkenden Lastmomente, alternativ oder zusätzlich jedoch auch durch die Auswertung von Signalen von Positions- und/oder Winkelsensoren erfolgen kann.

Bei der Auswertung der Lastmomente können die Oberarme nacheinander solange verfahren bzw. auf und ab bewegt werden, bis sie innerhalb eines Hysteresebereiches ihrer Lastmomente von weniger als einem Newtonmeter, vorzugsweise von weniger als 0,5 Nm, insbesondere von ca. 0,3 Nm, ein übereinstimmendes Lastmoment aufweisen. Auf diese Weise kann sichergestellt werden, dass die an den Oberarmen mittels ihrer Antriebsmotoren eingestellten Winkellagen sowohl jeweils Mindestdifferenzwinkel zu den beiden Endlagen aufweisen als auch einen Aufenthaltsort des Werkzeugkopfes definieren, der sich innerhalb eines definierten Abstandes zu einer ungefähr mittigen Lage innerhalb des Bewegungsraumes befindet. Sofern dagegen direkt die Signale von den Oberarmen zugeordneten Positions- und/oder Winkelsensoren ausgewertet werden können, ist mittels dieser Signalauswertung zu gewährleisten, dass die an den Oberarmen mittels ihrer Antriebsmotoren eingestellten Winkellagen sowohl jeweils Mindestdifferenzwinkel zu den beiden Endlagen aufweisen als auch einen Aufenthaltsort des Werkzeugkopfes definieren, der sich innerhalb eines definierten Abstandes zu einer ungefähr mittigen Lage innerhalb des Bewegungsraumes befindet. Bei beiden Sensorvarianten, die wahlweise auch miteinander kombiniert werden können, kann daher angenommen werden, dass der Werkzeugkopf nach dieser Prozedur des ersten Verfahrensschrittes nahezu mittig innerhalb des Bewegungsraumes und zwischen den wenigstens zwei beweglichen Armen steht bzw. hängt.

Es sei an dieser Stelle darauf hingewiesen, dass ein solcher Parallelkinematikoder Handhabungsroboter, der Gegenstand des erfindungsgemäßen Referenzierungs-, Kalibrierungs- und/oder Initialisierungsverfahrens ist, sehr häufig drei gleich dimensionierte und jeweils in 120°-Winkelversatz zueinander angeordnete Oberarme mit jeweils identischen Unterarmen und dazwischen beweglich und/oder drehbar aufgehängtem Werkzeugkopf aufweist. Solche sog. Tripode werden in der Praxis häufig eingesetzt und eignen sich in hervorragender Weise zur exakten Bewegungssteuerung, bspw. zum Manipulieren von Artikeln, Gegenständen, Stückgütern, Gebinden oder zum Manipulieren von Gruppierungen mit mehreren solcher Artikel, Gegenstände, Stückgüter, Gebinde. Diese Eignung für Tripode soll jedoch nicht einschränkend verstanden werden, da sich das Verfahren ebenso für Parallelkinematik-Roboter oder Handhabungsroboter mit zwei gleichartigen Armen oder auch solchen mit vier oder mehr beweglichen Armen eignet.

Sofern im Zusammenhang mit besonderen Ausstattungsvarianten des erfindungsgemäßen Handhabungs- und/oder Parallelkinematikroboters nicht eine Überprüfung der Freigängigkeit bestimmter Antriebs- und/oder Drehübertragungskomponenten erfolgen soll, was sich anhand solcher Ausstattungsvarianten weiter unten noch näher beschrieben findet, werden bei dem erfindungsgemäßen Verfahren in einem sich an den oben beschriebenen ersten Verfahrensschritt anschließenden zweiten Verfahrensschritt die wenigstens zwei Oberarme durch gleichzeitiges und/oder annähernd synchrones Verschwenken um ihre jeweiligen Schwenkachsen bis zu einer Grenzlage bewegt, die durch einen mechanischen Anschlag der unabhängig von den Oberarmen beweglichen Antriebsverbindung und/oder durch einen Längsanschlag der Kardanwelle zum Werkzeugkopf definiert ist, wonach in einem dritten Verfahrensschritt der Werkzeugkopf und/oder die ihm zugeordnete Antriebsverbindung oder Kardanwelle durch Zurückbewegen der wenigstens zwei Oberarme um einen definierten Schwenkwinkel von der Grenzlage distanziert wird/werden.

Der vorrangige Zweck dieser zweiten und dritten Verfahrensschritte ist es, einen Anschlag für die Längsverstellbarkeit der Antriebsverbindung oder Kardanwelle zu finden bzw. zu definieren, was sinnvollerweise bei ungefähr im Bereich seiner Hochachse zentriertem Werkzeugkopf erfolgen sollte, was durch ungefähr gleiche Winkelstellungen der Oberarme erreicht werden kann. Wenn in dieser ungefähr mittigen Stellung des Werkzeugkopfes alle Oberarme nach oben oder nach unten geschwenkt werden, bis der obere oder untere mechanische Anschlag für die Antriebsverbindung oder Kardanwelle erreicht ist, kann der Werkzeugkopf durch Absenken oder Anheben der Oberarme in eine definierte Lage gebracht werden, welche der längsverstellbaren Antriebsverbindung oder Kardanwelle noch genügend Verstellraum - entweder nach oben durch Reduzieren ihrer Länge oder nach unten durch ihre Verlängerung - lässt, um bei den nachfolgenden Verfahrensschritten nicht bereits nach kleinen Verstellbewegungen wieder an ihren mechanischen Anschlag zu gelangen. Insgesamt resultiert aus den zweiten und dritten Verfahrensschritten, dass die eingestellten Winkellagen der wenigstens zwei Oberarme jeweils definierte Differenzwinkel zu den beiden Endlagen aufweisen und/oder einen Aufenthaltsort des Werkzeugkopfes definieren, der sich innerhalb eines definierten Abstandes zu einer ungefähr mittigen Lage innerhalb des Bewegungsraumes befindet.

Anschließend wird in einem sich an die oben beschriebenen Verfahrensschritte anschließenden weiteren oder vierten Verfahrensschritt zumindest einer der wenigstens zwei Oberarme, insbesondere der drei vorhandenen Oberarme der Handhabungseinrichtung oder des Handhabungsroboters durch motorisches Verschwenken um seine Oberarm-Schwenkachse in eine seiner beiden Endlagen gebracht, wobei die hierbei erreichte Winkellage sensorisch erfasst und zur Lageund/oder Winkelinitialisierung des jeweiligen Oberarmes verwendet wird. Wenn an dieser Stelle von einer sensorischen Erfassung der Winkellagen gesprochen wird, so ist damit wiederum eine Erfassung von Lastmomenten und/oder von Winkelwerten mittels Winkelsensoren gemeint.

Dabei können bspw. Absolutwertgeber ausgelesen werden, oder es können unterschiedliche Positionssensoren eingesetzt und deren Signale ausgewertet werden. Anschließend kann der jeweilige Oberarm aus seiner zuvor eingestellten Endlage in eine definierte Winkellage und/oder wieder ungefähr in die zuvor eingenommene Ausgangswinkellage zurückbewegt werden. Durch das Einnehmen der jeweiligen Endlagen bzw. mechanischen Anschläge für die Oberarme können die Antriebseinheiten der Oberarme jeweils in ihren Positionen referenziert werden. Als für die Durchführung des vierten Verfahrensschrittes ausgewählte Endlagen der Oberarmschwenkbewegungen eignen sich normalerweise die oberen Endanschläge der Oberarme, die somit auch als Referenzpositionen für die Referenzierungen der Oberarm-Antriebseinheiten dienen. Ebenso können jedoch auch untere Endanschläge der Oberarme angefahren werden, die ebenfalls als Referenzpositionen für die Referenzierungen der Oberarm-Antriebseinheiten verwendet werden können.

Da nicht nur einer der Oberarme, sondern der mindestens eine weitere bzw. die zwei, drei oder mehr weiteren Oberarme in derselben Weise zu referenzieren sind, wird in einem fünften Verfahrensschritt ein weiterer der wenigstens zwei Oberarme der Handhabungseinrichtung oder des Handhabungsroboters durch motorisches Verschwenken um seine Oberarm-Schwenkachse in eine seiner beiden Endlagen oder wahlweise in dieselbe der beiden Endlagen gebracht, die auch im vierten Verfahrensschritt ausgewählt war, wobei die hierbei erreichte Winkellage sensorisch erfasst und zur Lage- und/oder Winkelinitialisierung des betroffenen Oberarmes verwendet wird. Auch hierbei ist vorgesehen, dass der Oberarm aus seiner im Zusammenhang mit der Durchführung des fünften Verfahrensschrittes erreichten Endlage wieder in die zuvor eingenommene Ausgangswinkellage zurückbewegt wird.

Sofern der Handhabungsroboter bzw. der Parallelkinematik-Roboter mehr als zwei bewegliche Arme aufweist, kann in einem sich an den fünften Verfahrensschritt anschließenden optionalen bzw. für einen Tripod als Handhabungsroboter notwendigen sechsten Verfahrensschritt ein dritter von insgesamt wenigstens drei vorhandenen Oberarmen der Handhabungseinrichtung oder des Handhabungsroboters durch motorisches Verschwenken um seine Oberarm-Schwenkachse in eine seiner beiden oder in dieselbe der beiden Endlagen gebracht wird, die auch im vierten und im fünften Verfahrensschritt für die jeweils verschwenkten anderen Oberarme ausgewählt war, wobei auch hier wiederum die in der Endlage erreichte Winkellage sensorisch erfasst und zur Lage- und/oder Winkelinitialisierung bzw. zur Referenzierung der Schwenkpositionen des betroffenen Oberarmes verwendet wird. Wahlweise kann dieser sechste Verfahrensschritte vorsehen, dass der vorhergehend in seine Endlage bewegte Oberarm aus seiner Endlage wieder ungefähr in die zuvor eingenommene Ausgangswinkellage zurückbewegt wird.

Sofern der Handhabungsroboter bzw. der Parallelkinematik-Roboter mehr als drei bewegliche Arme aufweist, kann in einem sich an den sechsten Verfahrensschritt anschließenden optionalen bzw. für einen sog. Quadpod als Handhabungsroboter notwendigen siebten Verfahrensschritt ein vierter von insgesamt wenigstens vier vorhandenen Oberarmen der Handhabungseinrichtung oder des Handhabungsroboters durch motorisches Verschwenken um seine Oberarm-Schwenkachse in eine seiner beiden oder in dieselbe der beiden Endlagen gebracht werden, die auch im vierten, im fünften sowie im sechsten Verfahrensschritt für die jeweils verschwenkten anderen Oberarme ausgewählt war, wobei auch hier wieder die hierbei erreichte Winkellage sensorisch erfasst und zur Lage- und/oder Winkelinitialisierung des betroffenen Oberarmes verwendet wird. Ggf. kann auch im Zusammenhang mit dem siebten Verfahrensschritt vorgesehen sein, dass der vorhergehend in seine Endlage bewegte Oberarm aus seiner Endlage wieder ungefähr in die zuvor eingenommene Ausgangswinkellage zurückbewegt wird.

Bei dem erfindungsgemäßen Verfahren kann es insbesondere von Vorteil sein, wenn während der Durchführung der zweiten und/oder dritten und/oder vierten und/oder fünften und/oder sechsten und/siebten Verfahrensschritte und den entsprechenden motorischen Bewegungen der Oberarme eine permanente und/oder eine in definierten Zeitabständen wiederholte Erfassung der jeweiligen Antriebsdrehmomente erfolgt, da eine solche permanente Erfassung und Überwachung in vorteilhafter Weise dazu genutzt werden kann, dass eine Überschreitung eines vorgegebenen und/oder variabel definierbaren Differenzwertes für in aufeinanderfolgenden Messungen gewonnene Drehmomentwerte als mechanischer Anschlag und/oder Endanschlag für den jeweils betroffenen Oberarm erkannt wird.

Eine solche Drehmomentlimitierung erlaubt es, ohne jegliche optische oder sonstige sensorische Bewegungserfassung einen existierenden mechanischen Anschlag für jede der durchgeführten Schwenkbewegungen der motorisch angetriebenen Oberarme zuverlässig zu erfassen. Auf diese Weise kann bei allen durchgeführten Bewegungen der Achsen im Rahmen eines Kalibrierungs- und/oder Referenzierungsverfahrens ein Drehmomentlimit gesetzt sein. Ein solches Drehmomentlimit muss keineswegs fest vorgegeben sein, sondern kann durch permanente dynamische Änderungsmöglichkeit in vorteilhafter Weise für unterschiedliche Winkelstellungen und damit zusammenhängend unterschiedliche Drehmomentwerte bei einem Bewegungsablauf eingesetzt und genutzt werden. Daraus folgt auch die universelle Einsetzbarkeit und Funktionsfähigkeit der beschriebenen Referenzierung auch bei unterschiedlichen Greifern oder Tripod-Robotern, die bspw. mit unterschiedlich dimensionierten Armen und/oder unterschiedlich dimensionierten und damit unterschiedlich schweren Werkzeugköpfen ausgestattet sein können.

Beim Starten der Zentrierung ist es von Vorteil, denjenigen Oberarm zu identifizieren, der bei einer Verstellung den höchsten Drehmomentwert liefert. Dieses ermittelte Drehmoment kann bspw. dazu verwendet werden, um auf Grundlage dieses Wertes, ggf. zuzüglich eines sinnvollen Zuschlages von bspw. 1,5 Newtonmeter, ein passendes Drehmomentlimit für den nachfolgenden Kalibrierungsvorgang zu setzen. Während des Vorganges der Zentrierung des Werkzeugkopfes kann dieses ermittelte Drehmoment ausreichen, um ohne Überschreitung dieses Drehmomentlimits den Werkzeugkopf in die Mitte seines Bewegungsraumes zu verfahren.

Zudem kann das Verfahren vorsehen, dass eine iterative Drehmomenterfassung beim Verschwenken (Hochfahren) in Richtung der ausgewählten Endlage wenigstens eines der Oberarme an seinen jeweiligen Endanschlag vorgesehen ist. Hierdurch kann bei der Durchführung des Verfahrens ständig erkannt werden, ob bereits eine Endlage und damit ein mechanischer Anschlag erreicht wurde. Kommt es nämlich während einer Bewegung eines der Oberarme zum Überschreiten des zuvor ermittelten Drehmomentlimits, so wird überprüft, ob die betreffende Achse seit dem Setzen des Drehmomentlimits oder der letzten Drehmomenterhöhung sich um einen definierten kleinen Schwenkwinkel von bspw. mehr als 0,3 Winkelgrade bewegt hat. Ist dies der Fall, so wird dies nicht als Kollision bzw. als Erreichen des mechanischen Anschlages erkannt, sondern lediglich als Aussage, dass das vom Antrieb erzeugte Drehmoment nicht ausreicht zur Bewegung der entsprechenden Achse. Wenn anschließend das Drehmomentlimit um einen sinnvollen Wert von bspw. ca. 0,5 Newtonmeter erhöht wird, kann auf dieser Basis die Schwenkbewegung fortgesetzt werden. War jedoch die Achsbewegung bei der gemessenen Drehmomenterhöhung geringer als der definierte kleine Differenzwinkel von bspw. 0,3 Grad, so kann bei dem erfindungsgemäßen Verfahren davon ausgegangen werden, dass eine Kollision bzw. ein Erreichen einer Endlage oder eines mechanischen Endanschlags stattgefunden hat.

Ebenso kann das erfindungsgemäße Verfahren vorsehen, dass während der Durchführung der zweiten und/oder dritten und/oder vierten und/oder fünften und/oder sechsten und/siebten Verfahrensschritte und den entsprechenden motorischen Bewegungen der Oberarme eine permanente und/oder eine in definierten Zeitabständen wiederholte Erfassung der jeweiligen Winkellagen der Oberarme erfolgt, wobei eine Unterschreitung eines vorgegebenen Differenzwertes für aufeinanderfolgend gemessene Winkellagen eines jeweiligen Oberarms als mechanischer Anschlag und/oder Endanschlag für den jeweils betroffenen Oberarm erkannt wird.

Eine solche Winkel- und/oder Positionslimitierung erlaubt es, mit einfachen sensorischen Mitteln einen existierenden mechanischen Anschlag für jede der durchgeführten Schwenkbewegungen der motorisch angetriebenen Oberarme zuverlässig zu erfassen. Auf diese Weise kann bei allen durchgeführten Bewegungen der Achsen im Rahmen eines Kalibrierungs- und/oder Referenzierungsverfahrens ein Positions- oder Winkellimit gesetzt sein, welches für unterschiedliche Winkelstellungen bei einem Bewegungsablauf eingesetzt und genutzt werden kann. Daraus folgt auch die universelle Einsetzbarkeit und Funktionsfähigkeit der beschriebenen Referenzierung auch bei unterschiedlichen Greifern oder Tripod-Robotern, die bspw. mit unterschiedlich dimensionierten Armen und/oder unterschiedlich dimensionierten und damit unterschiedlich schweren Werkzeugköpfen ausgestattet sein können.

Eine iterative Winkelerfassung beim Verschwenken in Richtung der ausgewählten Endlage wenigstens eines der Oberarme an seinen jeweiligen Endanschlag kann den Vorteil liefern, dass jegliche mechanische Beschädigung beim Erreichen des jeweiligen Endanschlags vermieden wird, da dieser mit geringer Verstellgeschwindigkeit erreicht wird. Hierdurch kann bei der Durchführung des Verfahrens ständig erkannt werden, ob bereits eine Endlage und damit ein mechanischer Anschlag erreicht wurde.

Diese beschriebenen Verfahrensvarianten können beim Erreichen aller denkbaren mechanischen Anschläge für den Handhabungsroboter verwendet werden, so bspw. auch beim Aufsetzen des Werkzeugkopfes auf einer unterhalb seines Bewegungsraumes befindlichen Plattform oder einer dort befindlichen Horizontalfördereinrichtung, die bspw. durch eine Mattenkette o. dgl. Fördereinrichtung gebildet sein kann. Da es nicht sinnvoll ist, den Werkzeugkopf gegen diese Horizontalfördereinrichtung zu bewegen, insbesondere gegen diese untere Auflagefläche nach unten zu drücken, kann auch diese erreichte Position erkannt und bei dem Kalibrierungsverfahren als untere Endlage definiert werden. Sofern ein solcher sinnvoller Test mit einem Aufsetzen des Greifers an seinem unteren Endanschlag durchgeführt wurde, kann er anschließend angehoben und die Zentrierung erneut durchgeführt werden, um die oberen Endanschläge zur Kalibrierung anzufahren.

Wie dies schon weiter oben anhand einer in der Praxis häufig eingesetzten Variante eines Parallelkinematik-Roboters mit rotierbarem Werkzeugkopf beschrieben wurde, ist zwischen einer oberen Rahmenanordnung bzw. Aufhängung, an der auch die zwei oder drei oder mehr beweglichen Oberarme mit ihren Antriebsmotoren befestigt sein können, und dem rotierbaren Werkzeugkopf eine Wellenverbindung angeordnet, insbesondere in Gestalt einer teleskopierbaren Kardanwelle. Es leuchtet unmittelbar ein, dass eine solche teleskopierbare Kardanwelle nur innerhalb von sinnvollen Grenzen längsverschieblich sein muss. Eine Verschiebbarkeit über sinnvolle Bewegungsgrenzen hinaus ist allein schon aus Gewichtsgründen nicht zweckmäßig. Diese begrenzte Teleskopierbarkeit der Kardanwelle verlangt es andererseits, diesen weiteren Endanschlag beim Kalibrierungsverfahren in geeigneter Weise zu berücksichtigen.

So kann auch dieser weitere mechanische Anschlag in das erfindungsgemäße Verfahren integriert bzw. bei diesem berücksichtigt werden, indem etwa bei allen Schwenkbewegungen und auch bei einer Fahrt gegen den Längsanschlag des Kardans zuerst das aktuelle Drehmoment jedes einzelnen Oberarmes ermittelt und zuzüglich eines sinnvollen Aufschlages von bspw. einem Wert von etwa 1,5 Nm als Drehmomentlimit gesetzt wird. Nach einer Fahrt gegen den oberen Längsanschlag des teleskopierbaren Kardans kann als nächst folgender Verfahrensschritt der Tripod-Roboter oder Parallelkinematik-Roboter wieder freigefahren wird.

Eine weitere Ausführungsvariante des erfindungsgemäßen Verfahrens kann einen alternativen und/oder weiteren Verfahrensschritt aufweisen, bei dem neben den oben beschriebenen Kalibrierungsschritten der verschwenkbaren Oberarme eine Drehlage des an den wenigstens zwei parallelkinematisch beweglichen Armen aufgehängtem Werkzeugkopfes kalibriert wird, indem der um eine vertikale oder gegenüber der Vertikalen leicht geneigten Drehachse rotierbare Werkzeugkopf innerhalb des Bewegungsraumes bei bekannter Position und/oder Ausrichtung der wenigstens zwei beweglichen Arme in eine definierte Drehlage gebracht und in einen definierten Abstand zu einem Gegenstand und/oder feststehenden Anlagepunkt bewegt und anschließend durch Rotieren des Werkzeugkopfes in Kontakt mit diesem Gegenstand und/oder Anlagepunkt gebracht und die dabei erreichte neue Drehlage zum Kalibrieren des Rotationsantriebes des Werkzeugkopfes erfasst und verarbeitet wird.

Alle beschriebenen Verfahrensvarianten haben den Vorteil gemeinsam, dass sie jeweils präzise Neukalibrierungen von unterschiedlich ausgestalteten und/oder ausgestatteten Parallelkinematik-Robotern ohne jegliche manuelle Eingriffe ermöglichen.

Mittels einer speziell definierten Bewegungsabfolge, welche in Abhängigkeit des aktuellen Haltemoments der Oberarme ermittelt wird, kann der Roboter aus jeglicher Position annähernd in die Mitte seines Arbeitsbereichs verbracht werden. Anschließend erfolgt das Anheben der Oberarme bis zum mechanischen Anschlag des Teleskop-Kardangelenks, sofern ein solches vorhanden ist. Bei fehlender teleskopierbarer Kardanwelle kann auch ein definiertes Grenzdrehmoment als sinnvolle Positionierungshilfe für eine Mittellage eines an den beweglichen Armen aufgehängten Werkzeugkopfes dienen. Ist dies erfolgt, werden sämtliche Oberarme in eine Position gefahren um danach wiederum jede einzelne Oberarmachse gegen deren mechanischen Endanschlag zu bewegen. Auf diese Weise kann eine erhebliche Reduzierung des erforderlichen personellen Arbeits- und Zeitaufwands erreicht werden, dafür eine Kalibrierung typischerweise nur noch eine Taste in einer Bedieneinheit gedrückt werden muss. Anschließend kann eine vollständig automatische Kalibrierung des Tripoden bzw. des Parallelkinematik-Roboters ablaufen.

Zur Erreichung des oben genannten Ziels schlägt die vorliegende Erfindung weiterhin eine programmgesteuerte Handhabungseinrichtung, insbesondere einen programmgesteuerten Handhabungs- und/oder Parallelkinematik-Roboter mit an mindestens zwei parallelkinematisch beweglichen Armen aufgehängtem Werkzeugkopf vor, wobei jeder der mindestens zwei Arme einen um eine definierte Oberarm-Schwenkachse motorisch zwischen zwei Endlagen beweglichen Oberarm sowie einen am Oberarm schwenkbeweglich gelagerten Unterarm umfasst, und wobei die Arme den an den mindestens zwei Unterarmen beweglich aufgehängten Werkzeugkopf halten, der eine bewegliche Antriebsverbindung, insbesondere eine längenvariable und/oder gelenkig bewegliche Kardanwelle zwischen einem ortsfesten Antriebsmotor und dem um mindestens eine Drehachse beweglichen Werkzeugkopf aufweist, und der mittels programmgesteuerter und aufeinander abgestimmter Schwenkbewegungen der Oberarme sowie der dadurch geführten Unterarme innerhalb eines definierten Bewegungsraumes beweglich ist. Es ist vorgesehen, dass die Steuerungsprogramme zur Steuerung aller Bewegungen der mindestens zwei beweglichen Arme in einer zentralen Steuerungseinheit abgespeichert sind und ein Referenzierungs-, Kalibrierungs- und/oder Initialisierungsprogramm oder mehrere Referenzierungs-, Kalibrierungs- und/oder Initialisierungsprogramme umfassen, die zur Durchführung eines der zuvor beschriebenen Verfahrensvarianten vorgesehen und geeignet sind.

Die solchermaßen charakterisierte programmgesteuerte Handhabungseinrichtung bzw. der Handhabungs- und/oder Parallelkinematik-Roboter kann bspw. als Handhabungs- und/oder Positionierungsroboter einen Teil einer Förder-, Stapel- und/oder Palettiervorrichtung, insbesondere zur Förderung, Handhabung, Stapelung und/oder zur Palettierung von Stückgütern und/oder Gebinden bilden.

Wahlweise kann die programmgesteuerte Handhabungseinrichtung bzw. der Handhabungs- und/oder Parallelkinematik-Roboter auch als Handhabungs- und/oder Manipulationsroboter einen Teil einer Fertigungs- und/oder Werkstückbehandlungsvorrichtung bilden, die insbesondere zur Herstellung, Behandlung und/oder Veränderung von Werkstücken in einer Fertigungsumgebung dienen kann.

Es sei an dieser Stelle ausdrücklich erwähnt, dass alle Aspekte und Ausführungsvarianten, die im Zusammenhang mit dem oben beschriebenen erfindungsgemäßen Verfahren erläutert wurden, gleichermaßen Teilaspekte der erfindungsgemäßen programmgesteuerte Handhabungseinrichtung bzw. des erfindungsgemäßen programmgesteuerten Handhabungs- und/oder ParallelkinematikRoboters betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Handhabungseinrichtung bzw. den erfindungsgemäßen Roboter. In umgekehrter Weise gilt dasselbe, so dass auch alle Aspekte und Ausführungsvarianten, die im Zusammenhang mit der erfindungsgemäßen programmgesteuerten Handhabungseinrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Handhabungseinrichtung von bestimmten Aspekten und/oder Zusammenhängen und/oder Wirkungen die Rede ist, so gilt dies gleichermaßen für das erfindungsgemäße Verfahren.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine Ausführungsvariante einer Maschinenumgebung, die insbesondere Teil einer Förder-, Handhabungs- und Paletteriermaschine zur Behandlung von Gebinden mit mehreren Getränkebehältern sein kann.
Figuren 2A bis 2H zeigen in aufeinander folgenden Sequenzen verschiedene Kalibrierungsschritte einer Handhabungseinrichtung am Beispiel eines ParallelkinematikRoboters, der Teil der Maschinenumgebung gemäß Fig. 1 sein kann.
Figuren 3A bis 3C zeigen in drei aufeinander folgenden Sequenzen verschiedene Schritte eines weiteren Kalibrierungsverfahrens der Handhabungseinrichtung bzw. des Parallelkinematik-Roboters.

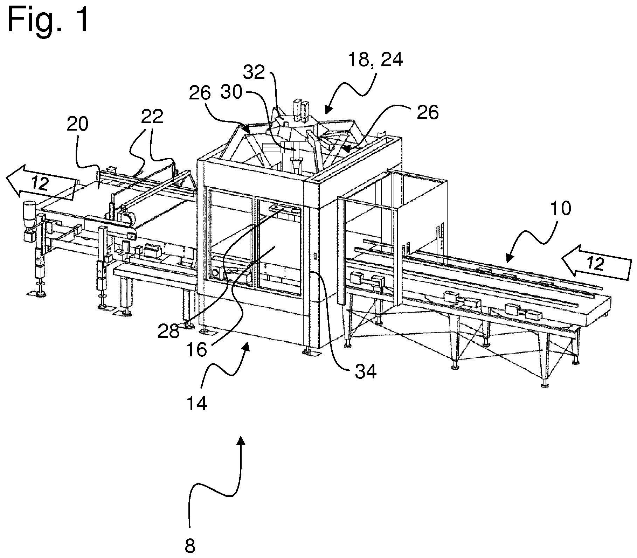

Für gleiche oder gleich wirkende Elemente der Erfindung werden in den Figuren 1 bis 3C jeweils identische Bezugszeichen verwendet. Ferner werden der Übersicht halber in der Regel nur diejenigen Bezugszeichen in den einzelnen Figuren verwendet und dargestellt, die für die Beschreibung der jeweiligen Figur sinnvoll bzw. erforderlich sind. Weiterhin sei darauf hingewiesen, dass die dargestellten Ausführungsformen lediglich Beispiele darstellen, wie das erfindungsgemäße Verfahren ausgestaltet sein kann; eine abschließende Begrenzung hinsichtlich des Bedeutungsinhalts soll damit an keiner Stelle impliziert werden.

Die schematische Perspektivansicht der Fig. 1 veranschaulicht beispielhaft eine Maschinenumgebung 8, bei der eine gemäß vorliegender Erfindung zu kalibrierende Handhabungseinrichtung, gebildet insbesondere durch einen Parallelkinematik-Roboter, zum Einsatz kommen kann. Die gezeigte Maschinenumgebung, die insbesondere Teil einer Förder-, Handhabungs- und/oder Palettiermaschine zur Behandlung von Gebinden mit mehreren Getränkebehältern sein kann, umfasst im gezeigten Ausführungsbeispiel eine Horizontalfördereinrichtung 10, auf der in Transportrichtung 12 hier nicht gezeigte Pack- oder Stückgüter wie etwa Gebinde mit mehreren durch jeweils eine Umverpackung zusammengefassten Getränkebehältern aufeinander folgend zu einer Handhabungsstation 14 befördert werden, die eine ebene Auflage- und Transportfläche 16 für die Packgüter, Stückgüter oder Gebinde aufweist, die in Transportrichtung 12 unmittelbar auf die Horizontalfördereinrichtung 10 folgt, die zur Weiterbeförderung der Packgüter, Stückgüter oder Gebinde in Transportrichtung 12 dient, und die zumindest so groß ist, dass die Packgüter, Stückgüter oder Gebinde darauf mittels einer oberhalb der ebenen Auflage- und Transportfläche 16 angeordneten Handhabungseinrichtung 18 erfasst, verschoben, gedreht und in gewünschter Weise positioniert werden können, um aus einer definierten Anzahl von solchermaßen positionierten und arrangierten Packgütern, Stückgütern oder Gebinden ein gewünschtes Lagenbild zu formen, in dem die Packgüter, Stückgüter oder Gebinde weitgehend lückenlos auf eine definierten Fläche aneinander gefügt sind.

Dieses mittels der Handhabungseinrichtung 18 in gewünschter Weise geformte Lagenbild kann anschließend in Transportrichtung 12 weiterbefördert und von der Auflage- und Transportfläche 16 an eine nachgeordnete Förderfläche 20 übergeben werden, wo ggf. noch bestehende Lücken zwischen den in das Lagenbild gebrachten Packgütern, Stückgütern oder Gebinden mittels quer zur Transportrichtung 12 und horizontal in Richtung zu den Seitenkanten des Lagenbildes verschiebbarer Anlagebalken 22 und/oder mittels wenigstens eines heb- und senkbaren und damit quer zur Transportrichtung 12 bringbaren Anlagebalkens 22 durch Zusammenschieben der Packgüter, Stückgüter oder Gebinde geschlossen werden können.

Die solchermaßen aus den mittels der Handhabungseinrichtung 18 in der Handhabungsstation 14 manipulierten und arrangierten Packgütern, Stückgütern oder Gebinden gebildeten Lagenanordnungen können in einer der Förderfläche 20 nachgeordneten, hier jedoch nicht gezeigten Palletierstation vorzugsweise jeweils lagenweise übereinander gestapelt und auf einer Palette zur weiteren Verpackung, Handhabung und/oder für einen Transport abgelegt und einem Versand zugänglich gemacht werden.

Wie es die Fig. 1 weiterhin verdeutlicht, ist die in der Handhabungsstation 14 beweglich aufgehängte Handhabungseinrichtung 18 im gezeigten Ausführungsbeispiel durch einen Handhabungs- und/oder Parallelkinematik-Roboter 24 gebildet, der mit drei parallelkinematisch beweglichen Armen 26 und einem beweglich daran aufgehängten Werkzeugkopf 28 ausgestattet ist. Die insgesamt drei beweglichen Arme 26 umfassen jeweils einen um eine definierte Oberarm-Schwenkachse motorisch zwischen zwei Endlagen beweglichen Oberarm sowie einen am Oberarm schwenkbeweglich gelagerten Unterarm, was in der Darstellung der Fig. 1 jedoch nicht im Detail erkennbar ist.

Zudem halten die Arme 26 den an den insgesamt drei Unterarmen beweglich aufgehängten Werkzeugkopf 28, der mittels programmgesteuerter und aufeinander abgestimmter Schwenkbewegungen der Oberarme sowie der dadurch geführten Unterarme innerhalb eines definierten Bewegungsraumes 30 im Bereich der Auflage- und Transportfläche 16 beweglich ist. Was ebenfalls in der Fig. 1 nicht erkennbar, jedoch für die gewünschte Funktion der Handhabungseinrichtung 18 bzw. des ParallelkinematikRoboters 24 unverzichtbar ist, sind die am Werkzeugkopf 28 angeordneten und gegeneinander zustellbaren Greifer oder Greifbacken zum Erfassen, Anheben, Verschieben, Umsetzen oder sonstigen Manipulieren der Packgüter, Stückgütern oder Gebinde, wobei der solchermaßen einsetzbare Greifarm mit den gegeneinander zustellbaren Greifern oder Greifbacken als Ganzes rotierbar ausgestaltet ist.

Diese Rotationsbewegungen können insbesondere mittels einer kardanisch beweglichen Antriebswelle 30 veranlasst und gesteuert werden, die in vertikaler oder schräger Richtung von einer oberen Aufhängung 32 des Parallelkinematik-Roboters 24 zum Werkzeugkopf 28 nach unten führt. Die obere Aufhängung 32, an der die Oberarme der beweglichen Arme 26 sowie deren Antriebsmotoren gelagert sowie auch der wenigstens eine Antriebsmotor für die Kardanwelle oder Antriebswelle 30 bildet einen oberen Teil eines Rahmengestells 34 der Handhabungsstation 14. Die gesamte Handhabungseinrichtung 18 bzw. der Parallelkinematik-Roboter 24 sind an dieser oberen Aufhängung 32 gehalten und in der beschriebenen Weise beweglich gelagert.

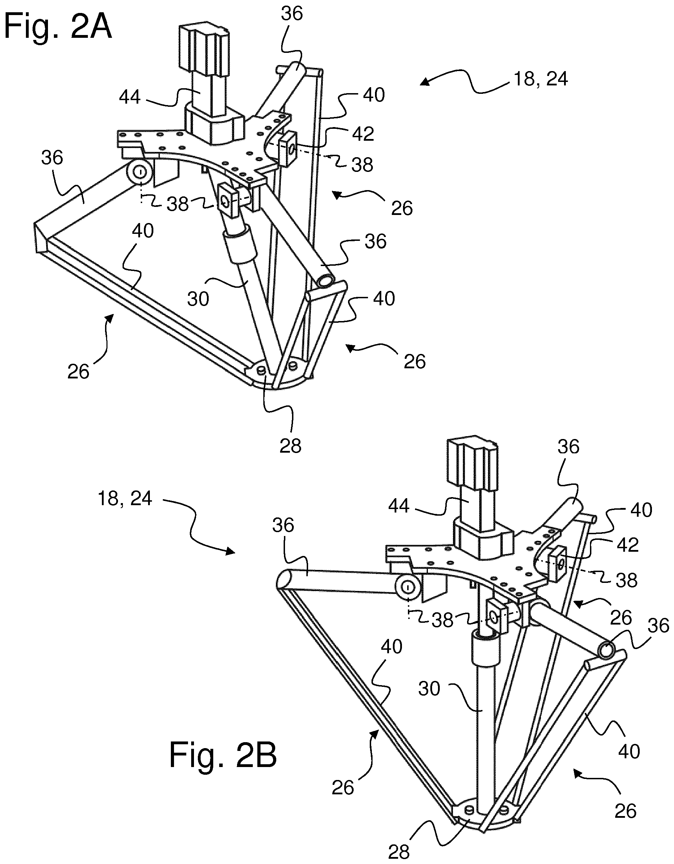

Eine für solche Parallelkinematik-Roboter 24 übliche Bauweise sieht jeweils Schwenklagerungen der insgesamt drei beweglichen Arme 26 an der oberen Aufhängung 32 vor, wobei die Oberarme 36 jeweils um horizontale Schwenkachsen 38 bewegt werden können, die unterhalb der oberen Aufhängung 32 angeordnet sind. Sowohl die um die horizontalen Schwenkachsen 38 beweglichen Oberarme 36, an denen die den Werkzeugkopf 28 haltenden Unterarme 40 schwenkbar angeordnet sind, als auch die für die Rotationsbewegungen des Werkzeugkopfes 28 und der daran angeordneten Greiferbacken (nicht verdeutlicht) verantwortliche Antriebswelle 30 sind typischerweise elektromotorisch betrieben, wobei die in der oberen Aufhängung 32 verankerten jeweiligen Antriebsmotoren 42 für die Oberarme 36 und 44 für die Antriebswelle 30 anhand der nachfolgend näher erläuterten Figuren 2A bis 2H deutlich erkennbar sind.

Ein besonderer Vorteil der für die Handhabungseinrichtung 18 verwendeten elektrischen Antriebsmotoren 42 und 44 besteht einerseits in der damit erreichbaren hohen Stellpräzision, wie sie für die exakte Führung des Werkzeugkopfes 28 innerhalb des Bewegungsraumes oberhalb der Auflage- und Transportfläche 16 der Handhabungsstation 14 (vgl. Fig. 1) wünschenswert ist. Allerdings zeigen die eingesetzten Antriebsmotoren 42 und/oder 44 die Besonderheit, dass bei dieser Antriebsvariante nach einem Maschinenstillstand, nach einem Stromausfall, nach einer Abschaltung und/oder nach einem erneuten Starten eine Kalibrierung einer Steuerungsvorrichtung der exakten Positionen der Antriebseinheiten notwendig ist, um die angestrebten präzisen Stell- und Manipulationsbewegungen aller beweglichen und angetriebenen Elemente und Komponenten des Handhabungs- und/oder Parallelkinematik-Roboters 24 sicherstellen zu können.

Es sei an dieser Stelle darauf hingewiesen, dass der Parallelkinematik- oder Handhabungsroboter 24, der Gegenstand des erfindungsgemäßen Kalibrierungsverfahrens ist, im gezeigten Ausführungsbeispiel drei gleich dimensionierte und jeweils in 120°-Winkelversatz zueinander angeordnete Oberarme 36 mit jeweils identischen Unterarmen 40 und dazwischen beweglich und/oder drehbar aufgehängtem Werkzeugkopf 28 aufweist. Solche sog. Tripode werden in der Praxis häufig eingesetzt und eignen sich in hervorragender Weise zur exakten Bewegungssteuerung, etwa zum Manipulieren von Artikeln, Gegenständen, Stückgütern, Gebinden oder zum Manipulieren von Gruppierungen mit mehreren solcher Artikel, Gegenstände, Stückgüter, Gebinde, wie dies oben bereits unter Bezugnahme auf die Fig. 1 erläutert wurde.

Bei dem anhand der Figuren 2A bis 2H nachfolgend in seinen aufeinander folgenden Verfahrensschritten veranschaulichten erfindungsgemäßen Kalibrierungsverfahren kann sich der Werkzeugkopf 28 nach einer Abschaltung und nach erneutem Anschalten und Wiederherstellen einer Stromversorgung zumindest für die Stellmotoren 42 der Oberarme 36 grundsätzlich in einer beliebigen Position befinden, was anhand der Fig. 2A verdeutlich ist, wo der Werkzeugkopf 28 in der Darstellung nach rechts verlagert ist, was mit zwei abgesenkten Oberarmen 36 und einem leicht angehobenem Oberarm 36 einhergeht. Die zwischen der oberen Aufhängung 32 und dem Werkzeugkopf 28 verlaufende kardanisch gelagerte Antriebswelle 30, die für die Rotationsbewegungen des Werkzeugkopfes 28 notwendig ist, verläuft demzufolge nicht vertikal, sondern in deutlicher Schrägstellung. Anstelle der in Fig. 2A beispielhaft gezeigten Ausgangsposition kann grundsätzlich jede andere Position der beweglichen Arme 26, der Antriebswelle 30 sowie des an den Unterarmen 40 beweglich gelagerten Werkzeugkopfes 28 die Ausgangsposition für das erfindungsgemäße Kalibrierungsverfahren in Frage kommen, sofern eine solche Position mit den maximal möglichen Schwenkbewegungen der Oberarme 36 erreichbar ist.

Um eine möglichst exakte Kalibrierung der beweglichen Komponenten zu ermöglichen, werden in einem ersten Verfahrensschritt (vgl. Fig. 2B) durch Herstellung einer ungefähr mittigen Position des Werkzeugkopfes 28 und etwa vertikal verlaufender Antriebswelle 30 mittels Erfassung der an den Oberarm-Schwenkachsen 38 wirksamen Lastmomente und durch Vergleich der auf die insgesamt drei Oberarme 36 wirkenden jeweiligen Lastmomente mittels der die Oberarme 36 bewegenden motorischen Antriebe 42 jeweils ungefähr übereinstimmende Winkellagen aller drei Oberarme 36 eingestellt. Die Lastmomente können hierbei sehr exakt aus den für die motorischen Antriebe 42 aufzuwendenden elektrischen Stromstärken gewonnen werden, so dass die in der Fig. 2B verdeutlichte ungefähr horizontale Lage aller drei Oberarme 36 eingestellt werden kann.

Es muss an dieser Stelle nicht gesondert erwähnt werden, dass zur Durchführung dieses ersten Verfahrensschrittes eine für die Ansteuerung der motorischen Antriebe 42 der Oberarme 36 verantwortliche zentrale Steuerungseinheit (nicht dargestellt) eingeschaltet und das dort implementierte Steuerungsprogramm gestartet ist, was bspw. nach einer Abschaltphase einen gewissen Zeitraum für den Programmstart erfordert. Normalerweise werden in dieser Startphase auch alle motorischen Antriebe 42 initialisiert und referenziert, um jeden Steuerungsbefehl zum Antrieb der Stellmotoren 42 in möglichst exakte Antriebsbewegungen umsetzen zu können.

Bei dem hier beschriebenen ersten Verfahrensschritt, bei dem mittels einer Erfassung der an den horizontalen Oberarm-Schwenkachsen 38 wirksamen Lastmomente und mittels eines Vergleiches der auf die Oberarme 36 wirkenden jeweiligen Lastmomente mit Hilfe der motorischen Antriebe 42 jeweils ungefähr übereinstimmende Winkellagen der drei Oberarme 36 eingestellt werden, besteht das vorrangige und für das erfindungsgemäße Kalibrierungsverfahren charakteristische Ziel darin, für den Werkzeugkopf 28 eine ungefähr mittige Position innerhalb seines Bewegungs- und/oder Manipulationsraumes zu finden, was mangels optischer oder sonstiger Positionskontrolle am sinnvollsten über die Erfassung der auf die Oberarme 36 wirkenden Lastmomente bei unbelastetem Werkzeugkopf 28 erfolgen kann. Hierzu können die Oberarme 36 bedarfsweise nacheinander um relativ kleine Verstellwinkel solange verstellt bzw. auf und ab bewegt werden, bis sie innerhalb eines sinnvollen Hysteresebereiches ihrer Lastmomente von bspw. weniger als einem Newtonmeter ein übereinstimmendes Lastmoment aufweisen.

Dieser sinnvolle bzw. für die Praxis vorteilhaft einsetzbare Hysteresebereich kann wahlweise auch weniger als 0,5 Nm, insbesondere weniger als ca. 0,3 Nm betragen, so dass die Oberarme 36 ein innerhalb dieser Grenzen übereinstimmendes Lastmoment aufweisen können, was als Einstellung gleicher Stellwinkel erkannt bzw. angenommen werden kann. Auf diese Weise kann sichergestellt werden, dass die an den Oberarmen 36 mittels ihrer Antriebsmotoren 42 eingestellten Winkellagen sowohl jeweils Mindestdifferenzwinkel zu den oberen und unteren Endlagen aufweisen als auch einen Aufenthaltsort des Werkzeugkopfes 28 definieren, der sich innerhalb eines definierten Abstandes zu einer ungefähr mittigen Lage innerhalb seines Bewegungsraumes befindet. Es kann daher angenommen werden, dass der Werkzeugkopf 28 nach dieser Einstellungsprozedur des ersten Verfahrensschrittes nahezu mittig innerhalb des Bewegungsraumes und zwischen den drei beweglichen Armen 26 des ParallelkinematikRoboters 24 steht bzw. hängt.

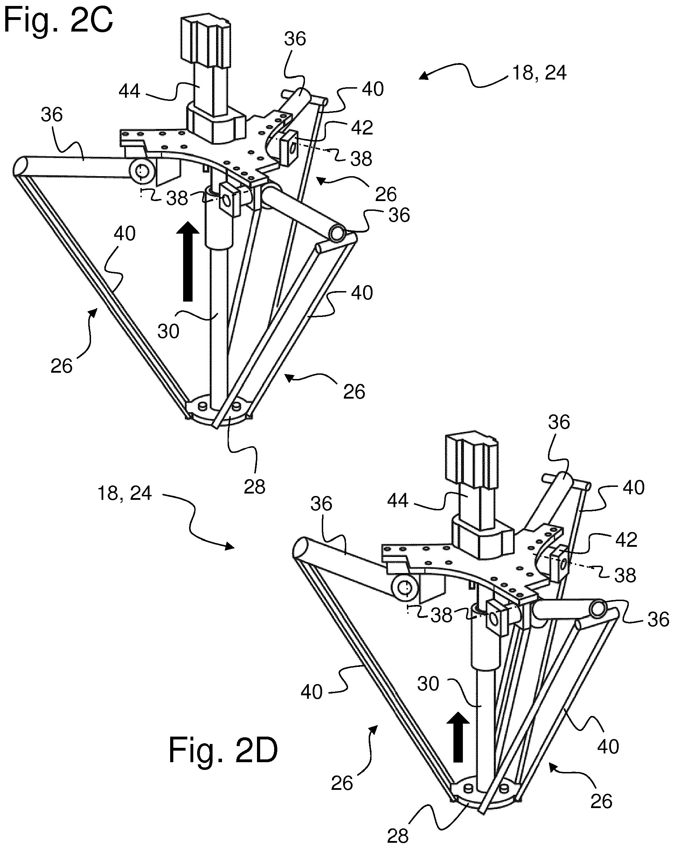

Nachdem diese mittige Position des Werkzeugkopfes 28 bei ungefähr horizontal ausgerichteten Oberarmen 36 erreicht ist, werden die Oberarme 36 gleichzeitig und synchron in langsamer Verstellbewegung nach oben verschwenkt, was in Fig. 2C verdeutlicht und durch den senkrecht nach oben weisenden Pfeil parallel zur Antriebswellenlängsrichtung angedeutet ist. Diese Verstellbewegung der Oberarme 36 erfolgt zumindest so weit nach oben in Richtung ihrer oberen Endlage bzw. ihres oberen mechanischen Anschlages, bis eine mechanische Anschlagposition für die kardanisch gelagerte und in ihrer Längsrichtung teleskopierbare Antriebswelle 30 erreicht ist, bei der die Antriebswelle ihre kürzest mögliche Längeneinstellung erreicht hat (vgl. Fig. 2D).

Da bei einer solchermaßen teleskopierbaren Antriebswelle 30 die kürzest mögliche Längeneinstellung eine nicht überwindbare mechanische Begrenzung darstellt, ist eine Berücksichtigung der Grenzen der Teleskopierbarkeit der Antriebswelle 30 zwingend zu berücksichtigen, zumal dieser Anschlag auch Auswirkungen auf die Ausdehnung des Bewegungsraumes des Werkzeugkopfes 28 nach oben hat.

Da jedoch nicht alle Parallelkinematik-Roboter 24 mit drehbaren Werkzeugköpfen 28 und damit mit solchen Antriebswellen 30 ausgestattet sein müssen, sondern in einfacheren Ausführungsvarianten auch ohne eine solche Antriebswelle 30 auskommen können, wird der anhand der folgenden Figuren erläuterte folgende Kalibrierungsablauf als zweiter Verfahrensschritt, d.h. ohne Berücksichtigung der Erfassung des mechanischen Anschlages der in ihrer Längsrichtung teleskopierbaren Antriebswelle 30 bezeichnet.

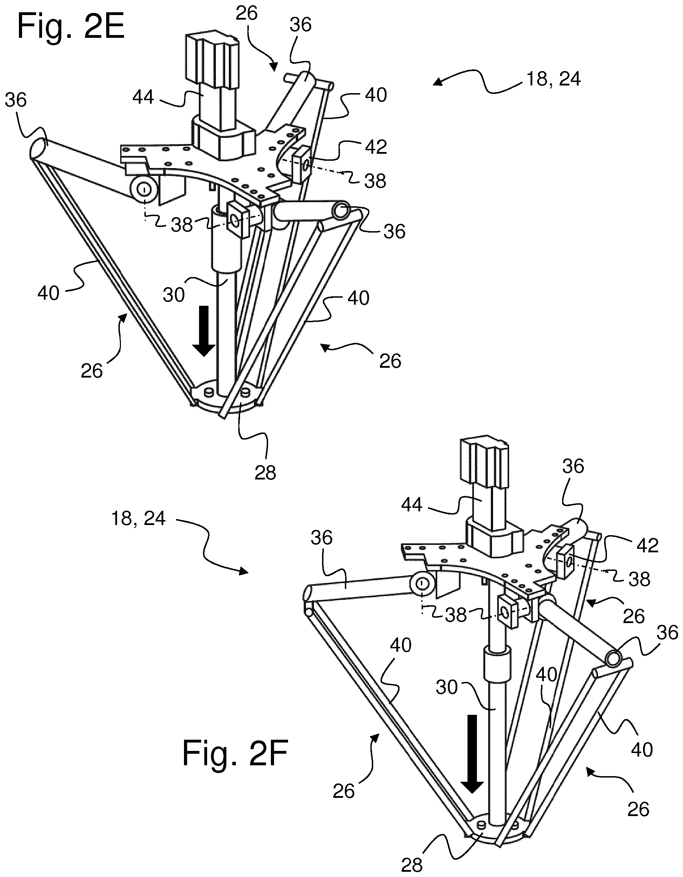

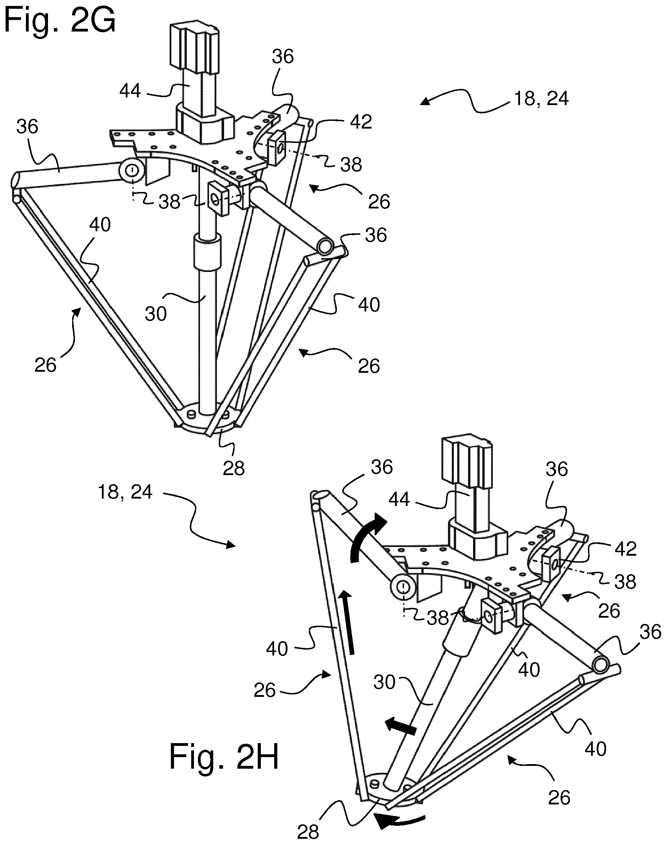

Nachdem der obere Anschlag für die teleskopierbare Antriebswelle 30 gemäß Fig. 2D erreicht und die entsprechenden Winkellagen der Oberarme 36 sowie die an den Antriebsmotoren 42 anliegenden Lastmomente erfasst wurden, kann der Werkzeugkopf 28 gemäß Fig. 2E allmählich wieder abgesenkt werden, bis entsprechend Fig. 2F wiederum eine Position mit ungefähr horizontal stehenden Oberarmen 36 erreicht wurde. Ausgehend von dieser annähernd zentrierten Position des Werkzeugkopfes 28 wird in einem dem ersten Verfahrensschritt unmittelbar (bei fehlender Antriebswelle 30) oder nach Durchlaufen der beschriebenen Zwischenschritte (vgl. Figuren 2D bis 2F) folgenden weiteren Verfahrensschritt, der hier als zweiter Verfahrensschritt bezeichnet wird, einer der insgesamt drei Oberarme 36 des Handhabungsroboters 24 durch motorisches Verschwenken um seine Oberarm-Schwenkachse 38 in eine seiner beiden Endlagen gebracht, nämlich der oberen Endlage (vgl. Fig. 2H), wobei die hierbei erreichte extreme Winkellage sensorisch erfasst und zur Lage- und/oder Winkelinitialisierung des jeweiligen Oberarmes 36 verwendet wird.

Die hierbei durchgeführten Schwenk-, Hebe- und Senkbewegungen sind durch Pfeile angedeutet, wobei lediglich der in Fig. 2H links liegende Oberarm 36 nach oben verschwenkt wird, während die anderen beiden Oberarme 36 in ihrer ungefähr horizontalen Lage gehalten werden. Der mit dem solchermaßen angehobenen Oberarm 36 gekoppelte Unterarm 40 wird hierdurch deutlich nach oben gehoben, was auch den Werkzeugkopf 28 an dieser Stelle anhebt und gleichzeitig nach links verschiebt (siehe Pfeilrichtung). Schließlich wird durch diese Schwenkbewegungen, bei denen die anderen beiden Unterarme 40 passiv mitbewegt werden, auch die Antriebswelle 30 deutlich nach links schräg gestellt, da sie zwischen dem Werkzeugkopf 28 und der oberen Aufhängung 32 gelagert ist und sich nicht frei bewegen kann.

Anschließend kann der jeweilige Oberarm 36 aus seiner zuvor eingestellten oberen Endlage wieder ungefähr in die zuvor eingenommene Ausgangswinkellage zurückbewegt werden, was der Ausrichtung der Arme 26 gemäß Fig. 2G entspricht. Durch das Einnehmen der jeweiligen Endlagen bzw. mechanischen Anschläge für die Oberarme 36 können die Antriebseinheiten 42 der Oberarme 36 jeweils in ihren Positionen referenziert werden. Wie es die Fig. 2H deutlich erkennen lässt, eignen sich als für die Durchführung des zweiten Verfahrensschrittes ausgewählte Endlagen der Oberarmschwenkbewegungen insbesondere die oberen Endanschläge der Oberarme 36, die somit auch als Referenzpositionen für die Referenzierungen der Oberarm-Antriebseinheiten 42 dienen.

Da nicht nur einer der Oberarme 36, sondern auch die beiden weiteren Oberarme 36 in derselben Weise zu referenzieren sind, kann in einem dritten Verfahrensschritt ein weiterer Oberarm 36 der Handhabungseinrichtung 18 oder des Handhabungsroboters 24 durch motorisches Verschwenken um seine Oberarm-Schwenkachse 38 in dieselbe der beiden Endlagen gebracht werden, die auch im zweiten Verfahrensschritt (Fig. 2H) ausgewählt war, wobei die hierbei erreichte Winkellage sensorisch erfasst und zur Lageund/oder Winkelinitialisierung des betroffenen Oberarmes 36 verwendet wird. Auch hierbei ist vorzusehen, dass der Oberarm aus seiner im Zusammenhang mit der Durchführung des dritten Verfahrensschrittes erreichten Endlage wieder ungefähr in die zuvor eingenommene Ausgangswinkellage (Fig. 2G) zurückbewegt wird. Gleiches gilt für den dritten Oberarm 36, der in einem dem dritten Verfahrensschritt zeitlich folgenden vierten Verfahrensschritt in derselben Weise zu referenzieren und zu kalibrieren ist.

Weiterhin kann erwähnt werden, dass es im Zusammenhang mit den oben erläuterten Verfahrensschritten des erfindungsgemäßen Verfahrens sinnvoll ist, während der Durchführung der zweiten und/oder dritten und/oder vierten und/oder fünften Verfahrensschritte und den entsprechenden motorischen Bewegungen der Oberarme eine permanente und/oder eine in definierten Zeitabständen wiederholte Erfassung der jeweiligen Antriebsdrehmomente durchzuführen, da eine solche permanente Erfassung und Überwachung in vorteilhafter Weise dazu genutzt werden kann, um bei einer festgestellten Überschreitung eines vorgegebenen und/oder variabel definierbaren Differenzwertes für in aufeinanderfolgenden Messungen gewonnene Drehmomentwerte einen mechanischen Anschlag und/oder Endanschlag für den jeweils betroffenen Oberarm erkennen zu können.

Eine derartige Drehmomentlimitierung erlaubt es, nur aufgrund einer Erfassung der aufzuwendenden elektrischen Ströme und ohne jegliche optische oder sonstige sensorische Bewegungserfassung einen existierenden mechanischen Anschlag für jede der durchgeführten Schwenkbewegungen der motorisch angetriebenen Oberarme zuverlässig zu erfassen, wobei dieser mechanische Anschlag normalerweise durch ein Drehmomentlimit charakterisiert ist. Ein solches Drehmomentlimit muss keineswegs fest vorgegeben sein, sondern kann durch permanente dynamische Änderungsmöglichkeit in vorteilhafter Weise für unterschiedliche Winkelstellungen und damit zusammenhängend unterschiedliche Drehmomentwerte bei einem Bewegungsablauf eingesetzt und genutzt werden. Daraus folgt auch die universelle Einsetzbarkeit und Funktionsfähigkeit der beschriebenen Referenzierung auch bei unterschiedlichen Greifern oder Tripod-Robotern, die bspw. mit unterschiedlich dimensionierten Armen und/oder unterschiedlich dimensionierten und damit unterschiedlich schweren Werkzeugköpfen ausgestattet sein können.

Beim Starten der Zentrierung im Rahmen eines Kalibrierungsvorganges kann es von Vorteil sein, denjenigen Oberarm zu identifizieren, der bei einer Verstellung den höchsten Drehmomentwert liefert. Dieses ermittelte Drehmoment kann bspw. dazu verwendet werden, um auf Grundlage dieses Wertes, ggf. zuzüglich eines sinnvollen Zuschlages von bspw. 0,5 bis etwa 1,5 Nm, ein passendes Drehmomentlimit für den nachfolgenden Kalibrierungsvorgang zu setzen. Während des Vorganges der Zentrierung des Werkzeugkopfes kann dieses ermittelte Drehmoment ausreichen, um ohne Überschreitung dieses Drehmomentlimits den Werkzeugkopf in die Mitte seines Bewegungsraumes zu verfahren.

Zudem kann das Verfahren vorsehen, dass eine iterative Drehmomenterfassung beim Verschwenken (Hochfahren) in Richtung der ausgewählten Endlage wenigstens eines der Oberarme an seinen jeweiligen Endanschlag vorgesehen ist. Hierdurch kann bei der Durchführung des Verfahrens ständig erkannt werden, ob bereits eine Endlage und damit ein mechanischer Anschlag erreicht wurde. Kommt es nämlich während einer Bewegung eines der Oberarme zum Überschreiten des zuvor ermittelten Drehmomentlimits, so wird überprüft, ob die betreffende Achse seit dem Setzen des Drehmomentlimits oder der letzten Drehmomenterhöhung sich um einen definierten kleinen Schwenkwinkel von bspw. mehr als 0,3° bewegt hat. Ist dies der Fall, so wird dies nicht als Kollision bzw. als Erreichen des mechanischen Anschlages erkannt, sondern lediglich als Aussage, dass das vom Antrieb erzeugte Drehmoment nicht ausreicht zur Bewegung der entsprechenden Achse. Wenn anschließend das Drehmomentlimit um einen sinnvollen Wert von bspw. ca. 0,5 Nm erhöht wird, kann auf dieser Basis die Schwenkbewegung fortgesetzt werden. War jedoch die Achsbewegung bei der gemessenen Drehmomenterhöhung geringer als der definierte kleine Differenzwinkel von bspw. 0,3°, so kann bei dem erfindungsgemäßen Verfahren davon ausgegangen werden, dass eine Kollision bzw. ein Erreichen einer Endlage oder eines mechanischen Endanschlags stattgefunden hat.

Dieses beschriebene Verfahren kann beim Erreichen aller denkbaren mechanischen Anschläge für den Handhabungsroboter verwendet werden, so bspw. auch beim Aufsetzen des Werkzeugkopfes auf einer unterhalb seines Bewegungsraumes befindlichen Plattform oder einer dort befindlichen Horizontalfördereinrichtung, die bspw. durch eine Mattenkette o. dgl. Fördereinrichtung gebildet sein kann. Da es nicht sinnvoll ist, den Werkzeugkopf gegen diese Horizontalfördereinrichtung zu bewegen, insbesondere gegen diese untere Auflagefläche nach unten zu drücken, kann auch diese erreichte Position erkannt und bei dem Kalibrierungsverfahren als untere Endlage definiert werden. Sofern ein solcher sinnvoller Test mit einem Aufsetzen des Greifers an seinem unteren Endanschlag durchgeführt wurde, kann er anschließend angehoben und die Zentrierung erneut durchgeführt werden, um die oberen Endanschläge zur Kalibrierung anzufahren.

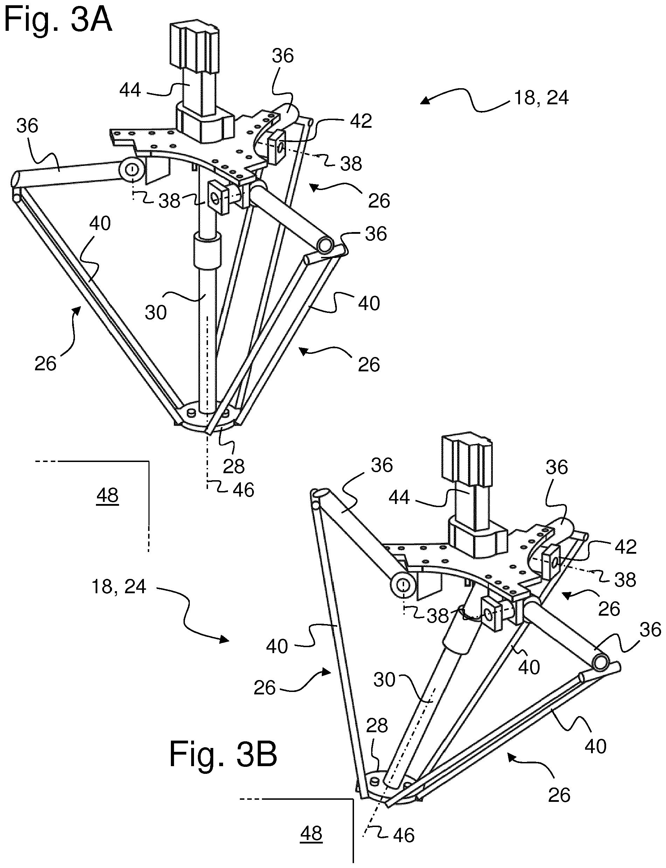

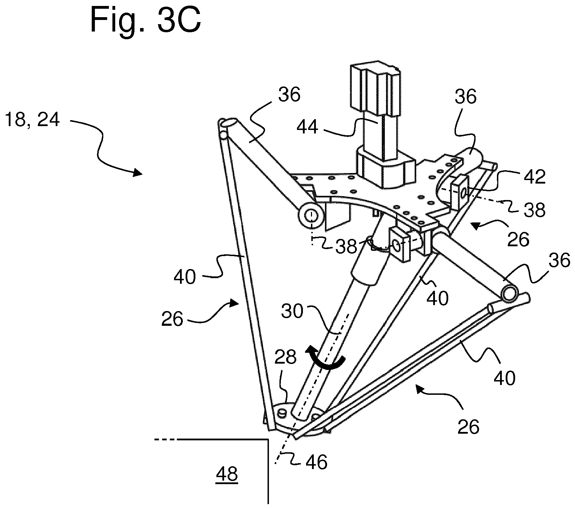

Die schematische Darstellung der Figuren 3A bis 3C verdeutlichen eine weitere sinnvolle Ausführungsvariante des erfindungsgemäßen Verfahrens, bei dem in einem alternativen bzw. von den zuvor beschriebenen unabhängigen und/oder in einem weiteren Verfahrensschritt in separaten Kalibrierungsschritten eine Drehlage des an den insgesamt drei parallelkinematisch beweglichen Armen 26 aufgehängtem Werkzeugkopfes 28 kalibriert wird, indem der um eine vertikale oder gegenüber der Vertikalen leicht geneigten Drehachse 46 rotierbare Werkzeugkopf 28 innerhalb seines Bewegungsraumes bei bekannter Position und/oder Ausrichtung der drei beweglichen Arme 26 in eine definierte Drehlage gebracht (Fig. 3A) und in einen definierten Abstand zu einem Gegenstand und/oder feststehenden Anlagepunkt 48 bewegt (Fig. 3B) und anschließend durch Rotieren des Werkzeugkopfes 28 in Kontakt mit diesem Gegenstand und/oder Anlagepunkt 48 gebracht und die dabei erreichte neue Drehlage zum Kalibrieren des Rotationsantriebes 44 des Werkzeugkopfes 28 erfasst und verarbeitet wird (vgl. Fig. 3C und der die Rotation andeutende Pfeil).

Ein am Werkzeugkopf 28 angeordneter und dort aufgehängter Greifarm ist aus Vereinfachungsgründen nicht dargestellt, dient aber als zu kontaktierendes Teil, der mit dem Gegenstand und/oder feststehenden Anlagepunkt 48 in Kontakt gebracht wird, um die Drehbewegungen der Antriebswelle 30 und die Antriebsbewegungen des hierfür verantwortlichen Antriebsmotors 44 zu kalibrieren.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der beweglichen Teile der Handhabungseinrichtung 18 oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens ein besseres Verständnis für den in den Ansprüchen sowie im allgemeinen Teil der Beschreibung allgemeiner und/oder abstrakter formulierten Erfindungsgedanken abzuleiten.

### Bezugszeichenliste

8 Maschinenumgebung
10 Horizontalfördereinrichtung
12 Transportrichtung, Förderrichtung
14 Handhabungsstation
16 Auflage- und Transportfläche
18 Handhabungseinrichtung
20 Förderfläche
22 Anlagebalken
24 Parallelkinematik-Roboter, Handhabungsroboter
26 Arm, beweglicher Arm
28 Werkzeugkopf
30 Antriebswelle, Kardanwelle, Antriebsverbindung
32 obere Aufhängung
34 Rahmengestell
36 Oberarm
38 horizontale Schwenkachse
40 Unterarm
42 Antriebsmotor (für Oberarm)
44 Antriebsmotor (für Antriebswelle)
46 Drehachse (Werkzeugkopf, rotierbarer Werkzeugkopf)
48 Anlagepunkt, fester Gegenstand

## Patentansprüche

1. Verfahren zum Referenzieren, Kalibrieren und/oder Initialisieren einer Handhabungseinrichtung (18), insbesondere eines Handhabungs- und/oder Parallelkinematik-Roboters (24), mit an mindestens zwei parallelkinematisch beweglichen Armen (26) aufgehängtem Werkzeugkopf (28), der eine bewegliche Antriebsverbindung, insbesondere eine längenvariable und/oder gelenkig bewegliche Kardanwelle (30), zwischen einem ortsfesten Antriebsmotor (44) und
dem um mindestens eine Drehachse beweglichen Werkzeugkopf (28) aufweist,
- wobei jeder der mindestens zwei Arme (26) einen um eine definierte Oberarm-Schwenkachse (38) motorisch zwischen zwei Endlagen beweglichen Oberarm (36) sowie einen am Oberarm (36) schwenkbeweglich gelagerten Unterarm (40) umfasst,
- und wobei die Arme (26) den an den mindestens zwei Unterarmen (40) beweglich aufgehängten Werkzeugkopf (28) halten, der mittels programmgesteuerter und aufeinander abgestimmter Schwenkbewegungen der Oberarme (36) sowie der dadurch geführten Unterarme (40) innerhalb eines definierten Bewegungsraumes beweglich ist,
- **dadurch gekennzeichnet, dass** in einem ersten Verfahrensschritt mittels Erfassung der an den Oberarm-Schwenkachsen (38) wirksamen Lastmomente und durch Vergleich der auf die mindestens zwei Oberarme (36) wirkenden jeweiligen Lastmomente und/oder mittels Erfassung von Signalen von Positionsund/oder Winkelsensoren mittels der motorischen Antriebe (42) jeweils übereinstimmende Winkellagen der wenigstens zwei Oberarme (36) eingestellt werden,
- wonach in einem zweiten Verfahrensschritt die wenigstens zwei Oberarme (36) durch gleichzeitiges und/oder annähernd synchrones Verschwenken um ihre jeweiligen Schwenkachsen (38) bis zu einer Grenzlage bewegt werden, die durch einen mechanischen Anschlag der unabhängig von den Oberarmen (36) beweglichen Antriebsverbindung zum Werkzeugkopf (28) definiert ist, und wonach in einem dritten Verfahrensschritt der Werkzeugkopf (28) und/oder die ihm zugeordnete Antriebsverbindung durch Zurückbewegen der wenigstens zwei Oberarme (36) um einen definierten Schwenkwinkel von der Grenzlage distanziert wird/werden,
- wodurch die eingestellten Winkellagen der wenigstens zwei Oberarme (36) jeweils definierte Differenzwinkel zu den beiden Endlagen aufweisen und/oder einen Aufenthaltsort des Werkzeugkopfes (28) definieren, der sich innerhalb eines definierten Abstandes zu einer mittigen Lage innerhalb des Bewegungsraumes befindet,
- wobei in einem weiteren oder vierten Verfahrensschritt zumindest einer der wenigstens zwei Oberarme (36) der Handhabungseinrichtung (18) durch motorisches Verschwenken um seine OberarmSchwenkachse (38) in eine der beiden Endlagen gebracht und die hierbei erreichte Winkellage sensorisch erfasst und zur Lage- und/oder Winkelinitialisierung des jeweiligen Oberarmes (36) verwendet wird, wonach der Oberarm (36) aus seiner Endlage in eine definierte Winkellage und/oder wieder in die zuvor eingenommene Ausgangswinkellage zurückbewegt wird.
- und wonach in einem nachfolgenden weiteren oder fünften Verfahrensschritt ein weiterer der wenigstens zwei Oberarme (36) der Handhabungseinrichtung (18) durch motorisches Verschwenken um seine Oberarm-Schwenkachse (38) in eine seiner beiden Endlagen gebracht wird, die auch im vorherigen oder vierten Verfahrensschritt ausgewählt war, und die hierbei erreichte Winkellage sensorisch erfasst und zur Lage- und/oder Winkelinitialisierung des betroffenen Oberarmes (36) verwendet wird.

2. Verfahren nach Anspruch 1, bei dem in einem weiteren oder sich an den fünften Verfahrensschritt anschließenden sechsten Verfahrensschritt ein dritter von insgesamt wenigstens drei vorhandenen Oberarmen (36) der Handhabungseinrichtung (18) durch motorisches Verschwenken um seine Oberarm-Schwenkachse (38) in eine seiner beiden oder in dieselbe der beiden Endlagen gebracht wird, die auch im vierten und im fünften Verfahrensschritt für die jeweils verschwenkten anderen Oberarme (36) ausgewählt war, und die hierbei erreichte Winkellage sensorisch erfasst und zur Lage- und/oder Winkelinitialisierung des betroffenen Oberarmes (36) verwendet wird.

3. Verfahren nach Anspruch 2, bei dem in einem weiteren oder sich an den sechsten Verfahrensschritt anschließenden siebten Verfahrensschritt ein vierter von insgesamt wenigstens vier vorhandenen Oberarmen (36) der Handhabungseinrichtung (18) durch motorisches Verschwenken um seine Oberarm-Schwenkachse (38) in eine seiner beiden oder in dieselbe der beiden Endlagen gebracht wird, die auch im vierten, im fünften sowie im sechsten Verfahrensschritt für die jeweils verschwenkten anderen Oberarme (36) ausgewählt war, und die hierbei erreichte Winkellage sensorisch erfasst und zur Lage- und/oder Winkelinitialisierung des betroffenen Oberarmes (36) verwendet wird.

4. Verfahren nach einem der Ansprüche 1 bis 3, bei dem während der Durchführung der zweiten und/oder dritten und/oder vierten und/oder fünften und/oder sechsten und/oder siebten Verfahrensschritten und den entsprechenden motorischen Bewegungen der Oberarme (36) eine permanente und/oder eine in definierten Zeitabständen wiederholte Erfassung der jeweiligen Antriebsdrehmomente erfolgt, und wobei eine Überschreitung eines vorgegebenen Differenzwertes für aufeinanderfolgende Drehmomentwerte als mechanischer Anschlag und/oder Endanschlag für den jeweils betroffenen Oberarm (36) erkannt wird.

5. Verfahren nach Anspruch 4, bei dem eine iterative Drehmomenterfassung beim Verschwenken in Richtung der ausgewählten Endlage wenigstens eines der Oberarme (36) an seinen jeweiligen Endanschlag vorgesehen ist.

6. Verfahren nach einem der Ansprüche 1 bis 3, bei dem während der Durchführung der zweiten und/oder dritten und/oder vierten und/oder fünften und/oder sechsten und/oder siebten Verfahrensschritten und den entsprechenden motorischen Bewegungen der Oberarme (36) eine permanente und/oder eine in definierten Zeitabständen wiederholte Erfassung der jeweiligen Winkellagen der Oberarme (36) erfolgt, und wobei eine Unterschreitung eines vorgegebenen Differenzwertes für aufeinanderfolgend gemessene Winkellagen eines jeweiligen Oberarms (36) als mechanischer Anschlag und/oder Endanschlag für den jeweils betroffenen Oberarm (36) erkannt wird.

7. Verfahren nach Anspruch 6, bei dem eine iterative Winkelerfassung beim Verschwenken in Richtung der ausgewählten Endlage wenigstens eines der Oberarme (36) an seinen jeweiligen Endanschlag vorgesehen ist.

8. Verfahren nach Anspruch 6 oder 7, bei dem nach Erreichen der durch den mechanischen Anschlag definierten oberen und/oder unteren Grenzlage für die Winkelstellung der Oberarme (36) die zweiten und/oder dritten und/oder vierten und/oder fünften und/oder sechsten und/oder siebten Verfahrensschritte unter Berücksichtigung der bei gemeinsamer Verstellung maximal erreichbaren Winkellage der Oberarme (36) durchgeführt werden.

9. Verfahren nach einem der Ansprüche 1 bis 8, bei dem in einem alternativen und/oder weiteren Verfahrensschritt eine Drehlage des an den wenigstens zwei parallelkinematisch beweglichen Armen (26) aufgehängtem Werkzeugkopfes (38) kalibriert wird, indem der um eine vertikale oder gegenüber der Vertikalen leicht geneigten Drehachse (46) rotierbare Werkzeugkopf (28) innerhalb des Bewegungsraumes bei bekannter Position und/oder Ausrichtung der wenigstens zwei beweglichen Arme (26) in eine definierte Drehlage gebracht und in einen definierten Abstand zu einem Gegenstand und/oder feststehenden Anlagepunkt (48) bewegt und anschließend durch Rotieren des Werkzeugkopfes (28) in Kontakt mit diesem Gegenstand und/oder Anlagepunkt (48) gebracht und die dabei erreichte neue Drehlage zum Kalibrieren des Rotationsantriebes (44) des Werkzeugkopfes (28) erfasst und verarbeitet wird.

10. Programmgesteuerte Handhabungseinrichtung (18), insbesondere Handhabungsund/oder Parallelkinematik-Roboter (24), mit an mindestens zwei parallelkinematisch beweglichen Armen (26) aufgehängtem Werkzeugkopf (28), wobei jeder der mindestens zwei Arme (26) einen um eine definierte Oberarm-Schwenkachse (38) motorisch zwischen zwei Endlagen beweglichen Oberarm (36) sowie einen am Oberarm (36) schwenkbeweglich gelagerten Unterarm (40) umfasst, und wobei die Arme (26) einen an den mindestens zwei Unterarmen (40) beweglich aufgehängten Werkzeugkopf (28) halten, der eine bewegliche Antriebsverbindung, insbesondere eine längenvariable und/oder gelenkig bewegliche Kardanwelle (30), zwischen einem ortsfesten Antriebsmotor (44) und dem um mindestens eine Drehachse beweglichen Werkzeugkopf (28) aufweist, und der mittels programmgesteuerter und aufeinander abgestimmter Schwenkbewegungen der Oberarme (36) sowie der dadurch geführten Unterarme (40) innerhalb eines definierten Bewegungsraumes beweglich ist, wobei die Handhabungseinrichtung eine zentrale Steuerungseinheit umfasst, in der Steuerungsprogramme zur Steuerung aller Bewegungen der mindestens zwei beweglichen Arme (26) abgespeichert sind, die ein Referenzierungs-, Kalibrierungs- und/oder Initialisierungsprogramm oder mehrere Referenzierungs-, Kalibrierungs- und/oder Initialisierungsprogramme umfassen, die zur Durchführung eines der Verfahrensvarianten gemäß einem der Ansprüche 1 bis 9 vorgesehen und geeignet sind.

11. Programmgesteuerte Handhabungseinrichtung (18) gemäß Anspruch 10, die bzw. der als Handhabungs- und/oder Positionierungsroboter einen Teil einer Förder-, Stapelund/oder Palettiervorrichtung, insbesondere zur Förderung, Handhabung, Stapelung und/oder zur Palettierung von Stückgütern und/oder Gebinden bildet.

12. Programmgesteuerte Handhabungseinrichtung (18) gemäß Anspruch 10, die bzw. der als Handhabungs- und/oder Manipulationsroboter einen Teil einer Fertigungsund/oder Werkstückbehandlungsvorrichtung, insbesondere zur Herstellung, Behandlung und/oder Veränderung von Werkstücken in einer Fertigungsumgebung bildet.

## Claims

1. A method for referencing, calibrating, and/or initialising a handling device (18), in particular, a handling robot and/or parallel kinematic robot (24), with a tool head (28) suspended from at least two parallel-kinematically movable arms (26), which tool head (28) has a movable drive connection, in particular, a length-variably and/or articulately movable cardan shaft (30) between a stationary drive motor (44) and the tool head (28), which is movable about at least one rotational axis,
- wherein each of the at least two arms (26) comprises an upper arm (36), which is motor-movable between two end positions about a defined upper-arm swivel axis (38), as well as also comprising a lower arm (40), which is mounted swivelably movable on the upper arm (36),
- and wherein the arms (26) hold the tool head (28), which is movably suspended from the at least two lower arms (40), and which is movable within a defined movement range by program-controlled and mutually coordinated swivel movements of the upper arms (36) as well as of the thereby guided lower arms (40),
- **characterised in that** corresponding angular positions of the at least two upper arms (36) are in each instance adjusted by the motor drives (42) in a first method step by detection of the load torques acting on the upper-arm swivel axes (38) and by comparison of the particular load torques acting on the at least two upper arms (36) and/or by detection of signals from position sensors and/or angle sensors,
- whereupon the at least two upper arms (36) are moved in a second method step by simultaneous and/or approximately synchronous swivelling about their particular swivel axes (38) up to a limit position, which is defined by a mechanical stop of the drive connection to the tool head (28), which drive connection is movable independently of the upper arms (36), and whereupon the tool head (28) and/or the drive connection assigned thereto is/are in a third method step distanced by a defined swivel angle from the limit position by a return movement of the at least two upper arms (36),
- whereby the adjusted angular positions of the at least two upper arms (36) in each instance have defined difference angles to the two end positions and/or define a situation of the tool head (28) located within a defined distance to a central position within the movement range,
- wherein at least one of the at least two upper arms (36) of the handling device (18) is brought into one of the two end positions in a further or fourth method step by motorised swivelling about the particular upper-arm swivel axis (38); and the angular position reached in this connection is sensor-detected and used for the position initialisation and/or angle initialisation of the particular upper arm (36), whereupon the upper arm (36) is returned from its end position into a defined angular position and/or into the previously assumed initial angular position,
- and whereupon a further of the at least two upper arms (36) of the handling device (18) is brought into one of its two end positions in a subsequent further or fifth method step by motorised swivelling about the particular upper-arm swivel axis (38) with said end position also having been selected in the previous or fourth method step; and the angular position reached in this connection is sensor-detected and used for the position initialisation and/or angle initialisation of the relevant upper arm (36).

2. The method according to claim 1, in which a third of a total of at least three present upper arms (36) of the handling device (18) is brought into one of its two or into the same of the two end positions in a further or sixth method step following the fifth method step by motorised swivelling about its upper-arm swivel axis (38) with said end position also having been selected for each of the other swivelled upper arms (36) in the fourth and in the fifth method step; and the angular position reached in this connection is sensor-detected and used for the position initialisation and/or angle initialisation of the relevant upper arm (36).

3. The method according to claim 2, in which a fourth of a total of at least four present upper arms (36) of the handling device (18) is brought into one of its two or into the same of the two end positions in a further or seventh method step following the sixth method step by motorised swivelling about its upper-arm swivel axis (38) with said end position also having been selected for each of the other swivelled upper arms (36) in the fourth, in the fifth, and also in the sixth method step; and the angular position reached in this connection is sensor-detected and used for the position initialisation and/or angle initialisation of the relevant upper arm (36).

4. The method according to one of the claims 1 to 3, in which a detection of the particular drive torques is performed in a permanent manner and/or repeated at defined intervals during the carrying out of the second and/or third and/or fourth and/or fifth and/or sixth and/or seventh method steps and during the corresponding motorised movements of the upper arms (36); and wherein an exceeding of a specified difference value for successive torque values is identified as mechanical stop and/or end stop for the particular relevant upper arm (36).

5. The method according to claim 4, in which an iterative torque detection during the swivelling toward the selected end position of at least one of the upper arms (36) to its particular end stop is provided.

6. The method according to one of the claims 1 to 3, in which a detection of the particular angular positions of the upper arms (36) is performed in a permanent manner and/or repeated at defined intervals during the carrying out of the second and/or third and/or fourth and/or fifth and/or sixth and/or seventh method steps and during the corresponding motorised movements of the upper arms (36); and wherein a falling below of a specified difference value for successively measured angular positions of a particular upper arm (36) is identified as mechanical stop and/or end stop for the particular relevant upper arm (36).

7. The method according to claim 6, in which an iterative angle detection during the swivelling toward the selected end position of at least one of the upper arms (36) to its particular end stop is provided.

8. The method according to claim 6 or 7, in which, after having reached the upper and/or lower limit position defined by the mechanical stop for the angular position of the upper arms (36), the second and/or third and/or fourth and/or fifth and/or sixth and/or seventh method steps are performed in consideration of the maximally reachable angular position of the upper arms (36) in an adjustment together.

9. The method according to one of the claims 1 to 8, in which an angular position of the tool head (38), which is suspended from the at least two parallel-kinematically movable arms (26), is calibrated in an alternative and/or further method step by the tool head (28) being brought into a defined angular position within the movement range with the position and/or orientation of the at least two movable arms (26) being known, which tool head (28) is rotatable about a rotational axis (46), and which rotational axis (46) is vertical or slightly inclined in relation to the vertical, and by the tool head (28) being moved to a defined distance from an object and/or from a stationary contact point (48), and by the tool head (28) subsequently being brought into contact with said object and/or contact point (48) by rotating the tool head (28), and by the new angular position reached thereby being detected and processed for the calibration of the rotary drive (44) of the tool head (28).

10. A program-controlled handling device (18), in particular, a handling robot and/or parallel kinematic robot (24), with a tool head (28) suspended from at least two parallel-kinematically movable arms (26), wherein each of the at least two arms (26) comprises an upper arm (36), which is motor-movable between two end positions about a defined upper-arm swivel axis (38), as well as also comprising a lower arm (40), which is mounted swivelably movable on the upper arm (36), and wherein the arms (26) hold a tool head (28), which is movably suspended from at least two lower arms (40), and which tool head (28) has a movable drive connection, in particular, a length-variably and/or articulately movable cardan shaft (30) between a stationary drive motor (44) and the tool head (28), which is movable about at least one rotational axis, and which tool head (28) is movable within a defined movement range by program-controlled and mutually coordinated swivel movements of the upper arms (36) as well as of the thereby guided lower arms (40), wherein the handling device comprises a central control unit, in which control programs for the control of all movements of the at least two movable arms (26) are stored, which control programs comprise a referencing program, calibration program, and/or initialisation program or a plurality of referencing programs, calibration programs, and/or initialisation programs, which are provided and suitable to perform one of the method variants according to one of the claims 1 to 9.

11. The program-controlled handling device (18) according to claim 10, which, as handling robot and/or positioning robot, forms a part of a conveying apparatus, stacking apparatus, and/or palletising apparatus, in particular, for the conveying, handling, stacking, and/or palletising of piece goods and/or packs.

12. The program-controlled handling device (18) according to claim 10, which, as handling robot and/or manipulation robot, forms a part of a production apparatus and/or workpiece-treatment apparatus, in particular, for the production, treatment, and/or modification of workpieces in a production environment.

## Revendications

1. Procédé de référencement, de calibrage et/ou d'initialisation d'un dispositif de manutention (18), en particulier d'un robot de manutention et/ou à cinématique parallèle (24), avec une tête d'outil (28) qui est suspendue sur au moins deux bras (26) déplaçables de façon cinématiquement parallèle et qui présente une liaison d'entraînement mobile, en particulier un arbre à cardan (30) à longueur variable et/ou articulé, entre un moteur d'entraînement (44) fixe et la tête d'outil (28) mobile autour d'au moins un axe de rotation,
- dans lequel chacun desdits au moins deux bras (26) comprend un bras supérieur (36) qui peut être déplacé par moteur autour d'un axe de pivotement de bras supérieur (38) défini entre deux positions finales ainsi qu'un bras inférieur (40) qui est monté à pivotement sur le bras supérieur (36),
- et dans lequel les bras (26) tiennent la tête d'outil (28) qui est suspendue de manière mobile sur lesdits au moins deux bras inférieurs (40) et qui peut être déplacée à l'intérieur d'un espace de mouvement défini au moyen de mouvements de pivotement commandés par programme et coordonnés des bras supérieurs (36) ainsi que des bras inférieurs (40) ainsi guidés,
- **caractérisé en ce que,** dans une première étape de procédé, en détectant les moments de charge agissant sur les axes de pivotement de bras supérieurs (38) et en comparant les moments de charge respectifs agissant sur lesdits au moins deux bras supérieurs (36) et/ou en détectant des signaux provenant de capteurs de position et/ou d'angle, des positions angulaires respectivement correspondantes desdits au moins deux bras supérieurs (36) sont réglées au moyen des entraînements par moteur (42),
- ce après quoi, dans une deuxième étape de procédé, lesdits au moins deux bras supérieurs (36) sont déplacés par pivotement simultané et/ou approximativement synchrone autour de leurs axes de pivotement (38) respectifs jusqu'à une position limite qui est définie par une butée mécanique de la liaison d'entraînement vers la tête d'outil (28), qui peut être déplacée indépendamment des bras supérieurs (36), et ce après quoi, dans une troisième étape de procédé, la tête d'outil (28) et/ou la liaison d'entraînement qui lui est associée est, sont espacée(s) de la position limite en reculant lesdits au moins deux bras supérieurs (36) d'un angle de pivotement défini,
- grâce à quoi les positions angulaires définies desdits au moins deux bras supérieurs (36) présentent chacune des angles de différence définis par rapport aux deux positions finales et/ou définissent un lieu de séjour de la tête d'outil (28) qui se trouve à une distance définie par rapport à une position centrale à l'intérieur de l'espace de mouvement,
- dans lequel, dans une autre ou quatrième étape de procédé, au moins l'un desdits au moins deux bras supérieurs (36) du dispositif de manutention (18) est amené dans l'une des deux positions finales par pivotement motorisé autour de son axe de pivotement de bras supérieur (38), et la position angulaire atteinte de cette manière est détectée par capteur et est utilisée pour initialiser la position et/ou l'angle du bras supérieur (36) respectif, ce après quoi le bras supérieur (36) est ramené de sa position finale dans une position angulaire définie et/ou à nouveau dans la position angulaire initiale précédemment occupée,
- et ce après quoi, dans une autre ou cinquième étape de procédé suivante, un autre desdits au moins deux bras supérieurs (36) du dispositif de manutention (18) est amené dans l'une de ses deux positions finales par pivotement motorisé autour de son axe de pivotement de bras supérieur (38), qui a été sélectionnée également dans l'étape de procédé précédente ou quatrième étape, et la position angulaire ainsi atteinte est détectée par capteur et est utilisée pour initialiser la position et/ou l'angle du bras supérieur (36) concerné.

2. Procédé selon la revendication 1, dans lequel, dans une autre étape de procédé ou une sixième étape de procédé suivant la cinquième étape de procédé, un troisième d'un total d'au moins trois bras supérieurs (36) existants du dispositif de manutention (18) est amené par pivotement motorisé autour de son axe de pivotement de bras supérieur (38) dans l'une de ses deux positions finales ou dans la même des deux positions finales qui a été sélectionnée également dans les quatrième et cinquième étapes de procédé pour les autres bras supérieurs (36) respectivement pivotés, et la position angulaire ainsi atteinte est détectée par capteur et est utilisée pour initialiser la position et/ou l'angle du bras supérieur (36) concerné.

3. Procédé selon la revendication 2, dans lequel, dans une autre étape de procédé ou une septième étape de procédé suivant la sixième étape de procédé, un quatrième d'un total d'au moins quatre bras supérieurs (36) existants du dispositif de manutention (18) est amené par pivotement motorisé autour de son axe de pivotement de bras supérieur (38) dans l'une de ses deux positions finales ou dans la même des deux positions finales qui a été sélectionnée également dans les quatrième, cinquième ainsi que sixième étapes de procédé pour les autres bras supérieurs (36) respectivement pivotés, et la position angulaire ainsi atteinte est détectée par capteur et est utilisée pour initialiser la position et/ou l'angle du bras supérieur (36) concerné.

4. Procédé selon l'une quelconque des revendications 1 à 3, dans lequel, lors de la mise en oeuvre des deuxième et/ou troisième et/ou quatrième et/ou cinquième et/ou sixième et/ou septième étapes de procédé et des mouvements motorisés correspondants des bras supérieurs (36), les couples d'entraînement respectifs sont détectés de manière permanente et/ou répétée à des intervalles de temps définis, et dans lequel, lorsqu'une valeur différentielle prédéterminée pour des valeurs de couple successives est dépassée, ceci est reconnu en tant que butée mécanique et/ou butée de fin de course pour le bras supérieur (36) respectivement concerné.

5. Procédé selon la revendication 4, dans lequel une détection itérative de couple est prévue lors du pivotement en direction de la position finale sélectionnée d'au moins l'un des bras supérieurs (36) au niveau de sa butée de fin de course respective.

6. Procédé selon l'une quelconque des revendications 1 à 3, dans lequel, lors de la mise en oeuvre des deuxième et/ou troisième et/ou quatrième et/ou cinquième et/ou sixième et/ou septième étapes de procédé et des mouvements motorisés correspondants des bras supérieurs (36), les positions angulaires respectives des bras supérieurs (36) sont détectées de manière permanente et/ou répétée à des intervalles de temps définis, et dans lequel, lorsqu'une valeur différentielle prédéterminée pour des positions angulaires mesurées successivement n'est pas atteinte, ceci est reconnu en tant que butée mécanique et/ou butée de fin de course pour le bras supérieur (36) respectivement concerné.

7. Procédé selon la revendication 6, dans lequel une détection itérative d'angle est prévue lors du pivotement en direction de la position finale sélectionnée d'au moins l'un des bras supérieurs (36) au niveau de sa butée de fin de course respective.

8. Procédé selon la revendication 6 ou 7, dans lequel, après avoir atteint la position limite supérieure et/ou inférieure définie par la butée mécanique pour la position angulaire des bras supérieurs (36), les deuxième et/ou troisième et/ou quatrième et/ou des cinquième et/ou sixième et/ou septième étapes de procédé sont mises en oeuvre en tenant compte de la position angulaire des bras supérieurs (36), qui peut être atteinte au maximum lorsqu'ils sont réglés ensemble.

9. Procédé selon l'une quelconque des revendications 1 à 8, dans lequel, dans une étape de procédé alternative et/ou supplémentaire, une position de rotation de la tête d'outil (38) suspendue sur lesdits au moins deux bras (26) mobiles de façon cinématiquement parallèles est calibrée en amenant la tête d'outil (38) qui peut tourner autour d'un axe de rotation vertical ou légèrement incliné par rapport à la verticale dans une position de rotation définie à l'intérieur de l'espace de mouvement, avec une position et/ou une orientation connues desdits au moins deux bras (26) mobiles, et en la déplaçant dans une distance définie par rapport à un objet et/ou un point d'appui fixe (48), et puis, en tournant la tête d'outil (28), elle est mise en contact avec cet objet et/ou ce point d'appui (48), et la nouvelle position de rotation ainsi atteinte est détectée et traitée pour calibrer l'entraînement de rotation (44) de la tête d'outil (28).

10. Dispositif de manutention commandé par programme (18), en particulier robot de manutention et/ou à cinématique parallèle (24), avec une tête d'outil (28) qui est suspendue sur au moins deux bras (26) déplaçables de façon cinématiquement parallèle, dans lequel chacun desdits au moins deux bras (26) comprend un bras supérieur (36) qui peut être déplacé par moteur autour d'un axe de pivotement de bras supérieur (38) défini entre deux positions finales ainsi qu'un bras inférieur (40) qui est monté à pivotement sur le bras supérieur (36), et dans lequel les bras (26) tiennent une tête d'outil (28) qui est suspendue de manière mobile sur lesdits au moins deux bras inférieurs (40) et présente une liaison d'entraînement mobile, en particulier un arbre à cardan (30) à longueur variable et/ou articulé, entre un moteur d'entraînement (44) fixe et la tête d'outil (28) mobile autour d'au moins un axe de rotation, et qui peut être déplacée à l'intérieur d'un espace de mouvement défini au moyen de mouvements de pivotement commandés par programme et coordonnés des bras supérieurs (36) ainsi que des bras inférieurs (40) ainsi guidés, dans lequel le dispositif de manutention comprend une unité centrale de commande dans laquelle sont mémorisés des programmes de commande pour commander tous les mouvements desdits au moins deux bras mobiles (26), qui comprennent un programme de référencement, de calibrage et/ou d'initialisation ou une pluralité de programmes de référencement, de calibrage et/ou d'initialisation qui sont prévus et adaptés pour mettre en œuvre l'une des variantes de procédé selon l'une quelconque des revendications 1 à 9.

11. Dispositif de manutention commandé par programme (18) selon la revendication 10, qui, en tant que robot de manutention et/ou de positionnement, fait partie d'un dispositif de convoyage, d'empilage et/ou de palettisation, en particulier pour le transport, la manutention, l'empilage et/ou la palettisation de produits de détail et/ou de multipacks.

12. Dispositif de manutention commandé par programme (18) selon la revendication 10, qui, en tant que robot de manutention et/ou de manipulation, fait partie d'un dispositif de fabrication et/ou de traitement de pièces, en particulier pour la fabrication, le traitement et/ou la modification de pièces dans un environnement de fabrication.
